# EUROPEAN PATENT APPLICATION

(11) **EP 4 765 904 A1**
(43) Date of publication of application: **24.06.2026**
(21) Application number: 24861811.8
(22) Date of filing: 19.08.2024
(51) Int. Cl.: H04W 8/22

(54) **COMMUNICATION METHOD, APPARATUS AND SYSTEM**

(30) Priority: 06.09.2023 CN 202311149742
(71) Applicant: HUAWEI TECHNOLOGIES CO., LTD., Shenzhen 518129 (CN)
(72) Inventor: QIN, Cheng, Shenzhen, Guangdong 518129 (CN); WANG, Sihai, Shenzhen, Guangdong 518129 (CN); YANG, Rui, Shenzhen, Guangdong 518129 (CN)
(74) Representative: Thun, Clemens
(86) International application number: PCT/CN2024/113086
(87) International publication number: WO 2025/050967

(57) **Abstract**

This application relates to a communication method, an apparatus, and a system. A terminal device receives first information from a network device. The terminal device processes the first information by using an AI model or AI function, where the AI model or AI function is used to implement a part of or all functions of a first receiver of the terminal device. The terminal device determines performance of the AI model or AI function based on a processing result of the first information. For an AI model or AI function used to implement a receiving function, embodiments of this application provide a manner of determining performance of the AI model or AI function.

## Description

### CROSS-REFERENCE TO RELATED APPLICATIONS

This application claims priority to Chinese Patent Application No. 202311149742.6, filed with the China National Intellectual Property Administration on September 6, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, an apparatus, and a system.

### BACKGROUND

Currently, application of artificial intelligence (artificial intelligence, AI) in communication, especially in air interface, has been widely studied. For example, currently, a project has been initiated for research on the AI in the air interface, and research has been performed on a basic framework of using the AI in the air interface and several typical use cases of the AI in the air interface (AI channel state information (channel state information, CSI) feedback, AI beam management, and AI positioning). Considering that a future communication system is to be further closely combined with AI technologies, more conventional communication modules may be replaced by AI. An AI receiving algorithm is a possible direction.

The so-called AI receiving algorithm uses an AI model to replace some or all functional modules in a conventional receiver. In comparison with a conventional receiving algorithm, the AI model may be closely combined with a specific application scenario, a condition, and the like. For example, the AI model is trained in a targeted manner based on the application scenario, the condition, or the like. Therefore, using the AI receiving algorithm can obtain better performance. Alternatively, on the premise of obtaining performance similar to that obtained by using the conventional receiving algorithm, using the AI model helps reduce calculation complexity, and further reduce power consumption of a receiving device, so that an energy saving effect can be achieved.

When the AI model is used to implement a receiving function, performance of the AI model is closely related to receiving performance. However, there is no conclusion on how to determine the performance of the AI model used to implement the receiving function.

### SUMMARY

Embodiments of this application provide a communication method, an apparatus, and a system, and provide a manner of determining performance of an AI model or AI function.

According to a first aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device may include a first receiver. The method includes: receiving first information from a network device; processing the first information by using an AI model or AI function, where the AI model or AI function is used to implement a part of or all functions of the first receiver; and determining performance of the AI model or AI function based on a processing result of the first information.

In this embodiment of this application, after receiving the first information, the terminal device processes the first information by using the AI model or AI function, so that the terminal device can determine the performance of the AI model or AI function based on the processing result. In other words, for an AI model or AI function used to implement a receiving function, this embodiment of this application provides a manner of determining performance of the AI model or AI function. For example, if it is determined that the performance of the AI model or AI function is poor, a corresponding measure may be taken, for example, adjusting the performance of the AI model or AI function, reselecting an AI model or AI function, or retraining the AI model or AI function, so that receiving performance can be improved.

In an optional implementation, an information amount of the first information is less than or equal to a first threshold. A small information amount of the first information helps reduce complexity of processing the first information by the terminal device.

In an optional implementation, the method further includes: receiving downlink control information from the network device, where the downlink control information is used to schedule the first information. The downlink control information includes first indication information, where the first indication information indicates that the first information is used to determine the performance of the AI model or AI function. Alternatively, the downlink control information is scrambled by using a first RNTI, where the first RNTI indicates that the first information is used to determine the performance of the AI model or AI function. The downlink control information may indicate a purpose of the first information in an explicit manner of including the first indication information, so that the indication is clear. Alternatively, the downlink control information may indicate a purpose of the first information in an implicit manner of scrambling, so that an indication purpose is achieved without adding additional indication overheads.

In an optional implementation, the downlink control information further indicates a transmission resource of the first information. The transmission resource of the first information may be predefined in a protocol, agreed on by the network device and the terminal device in advance, or indicated by the downlink control information. A manner is flexible.

In an optional implementation, the downlink control information indicates the transmission resource of the first information in the following manner: The downlink control information indicates a location of the transmission resource of the first information. Alternatively, the downlink control information includes an index of the transmission resource of the first information. Alternatively, the downlink control information is further used to schedule second information, where the second information is service data or control information; and the downlink control information further indicates an offset of the transmission resource of the first information relative to a transmission resource of the second information. The downlink control information may directly indicate the location of the transmission resource of the first information, and the indication is clear. Alternatively, the downlink control information may include the index of the transmission resource of the first information. For example, the network device and the terminal device pre-agree on a resource used for transmission of test information, or a protocol predefines a resource used for transmission of test information. In this way, the downlink control information needs to include only an index of the corresponding resource, so that overheads of the downlink control information can be reduced. Alternatively, if the downlink control information is further used to schedule the second information, the downlink control information may also indicate the offset of the transmission resource of the first information relative to the transmission resource of the second information, so that the transmission resource of the first information can be indicated. Alternatively, if the downlink control information is further used to schedule the second information, and the offset of the transmission resource of the first information relative to the transmission resource of the second information may also be pre-agreed on by the network device and the terminal device, or may be predefined in a protocol, the downlink control information may not need to indicate the offset, so that overheads of the downlink control information can be reduced. It can be learned that a manner of indicating the transmission resource of the first information is flexible.

In an optional implementation, the first information and the second information are separately and independently encoded. The first information and the second information are independently encoded, so that impact of the information used to determine the performance of the AI model or AI function on a common service can be reduced.

In an optional implementation, a transmission resource of the first information is preconfigured by the network device, or is predefined. If the transmission resource of the first information is preconfigured by the network device or predefined in a protocol, the transmission resource of the first information may not need to be indicated by the downlink control information, so that overheads of the downlink control information can be reduced. Alternatively, even if the transmission resource of the first information is preconfigured by the network device or predefined in a protocol, the transmission resource of the first information may still be indicated by the downlink control information. For example, a plurality of transmission resources are preconfigured or predefined, and the downlink control information may indicate some or all of the transmission resources, so that selection of the transmission resource of the first information is more flexible.

In an optional implementation, the method further includes: sending first request information to the network device, where the first request information is used to request to determine the performance of the AI model or AI function; or receiving second indication information from the network device, where the second indication information indicates to determine the performance of the AI model or AI function. The terminal device may start a detection (or monitoring) process of the AI model or AI function, or the network device may start a detection process of the AI model or AI function. This is flexible.

In an optional implementation, the first request information is included in a MAC CE, UCI, or an RRC message.

In an optional implementation, the first request information further includes first assistance information, and the first assistance information is assistance information of information used to determine the performance of the AI model or AI function. When requesting to start the detection process of the AI model or AI function, the terminal device may report the first assistance information to the network device, so that the network device determines the test information based on the first assistance information. In this way, the test information determined by the network device better meets a real-time requirement of the terminal device. In this embodiment of this application, the information used to determine the AI model or AI function is referred to as test information, monitoring information, or the like. The test information is mainly used as an example in this specification.

In an optional implementation, the method further includes: receiving first configuration information from the network device, where the first configuration information is used to configure a parameter of the information used to determine the performance of the AI model or AI function. The network device may configure the parameter of the test information for the terminal device, so that the terminal device can determine the test information based on the parameter, to receive and process the test information.

In an optional implementation, the parameter of the information used to determine the performance of the AI model or AI function includes one or more of the following: type information of the information used to determine the performance of the AI model or AI function; information about a generation manner of the information used to determine the performance of the AI model or AI function; or information about a sending manner of the information used to determine the performance of the AI model or AI function. The parameter of the test information may further include another parameter, for example, may further include a size of the test information. This is not limited herein.

In an optional implementation, the first configuration information is further used to configure a truth value. Alternatively, the first configuration information is further used to configure a determining manner of a truth value. The truth value includes label information corresponding to the first information, and the label information is used by the terminal device to determine the performance of the AI model or AI function based on the processing result of the first information and the label information. If the terminal device detects the performance of the AI model or AI function in a direct detection manner, the terminal device may obtain the truth value. For example, the truth value may be understood as original information. For example, if the terminal device receives and processes the first information completely accurately, obtained information should be completely the same as the truth value. In this way, the terminal device can determine the performance of the AI model or AI function based on the processing result of the first information and the truth value.

In an optional implementation, both the truth value and the first information are data, sequences, or reference signals.

In an optional implementation, the method further includes: receiving the first configuration information from the network device, where the first configuration information includes third indication information, and the third indication information indicates that the first information is used only to determine the performance of the AI model or AI function. The network device may indicate, to the terminal device, that the first information is not used for another purpose. In this case, the terminal device may use the first information only to determine the performance of the AI model or AI function, and does not use the first information for another purpose.

In an optional implementation, the first information is used only to determine the performance of the AI model or AI function. For example, that the first information is not used for another purpose may be agreed on by the network device and the terminal device in advance, or may be predefined in a protocol. In this case, the network device may not need to indicate this to the terminal device, so that indication overheads can be reduced.

In an optional implementation, the first configuration information is included in a unicast message; or the first configuration information is included in a multicast message; or the first configuration information is included in a broadcast message. The first configuration information may be sent to the terminal device in a unicast manner, or may be sent in a multicast or broadcast manner, so that sending overheads can be reduced.

In an optional implementation, the broadcast message is a SIB or an RRC message.

In an optional implementation, the method further includes: sending second assistance information to the network device, where the second assistance information indicates one or more of the following: the terminal device supporting the AI model or AI function, a manner in which the terminal device detects the AI model or AI function, or the assistance information of the information used to determine the performance of the AI model or AI function. The terminal device may send the second assistance information to the network device, so that the network device determines the test information based on the second assistance information. In this way, the test information determined by the network device better meets a requirement of the terminal device.

In an optional implementation, the assistance information of the information used to determine the performance of the AI model or AI function includes one or more of the following: type information of the AI model or AI function; a size of the information used to determine the performance of the AI model or AI function; the type information of the information used to determine the performance of the AI model or AI function; the information about the generation manner of the information used to determine the performance of the AI model or AI function; or the information about the sending manner of the information used to determine the performance of the AI model or AI function.

In an optional implementation, the terminal device further includes a second receiver, and the determining the performance of the AI model or AI function based on the processing result of the first information includes: separately processing the first information by using the AI model or AI function and the second receiver, and determining the performance of the AI model or AI function based on a processing result of the AI model or AI function and a processing result of the second receiver; or processing the first information by using the AI model or AI function, and determining the performance of the AI model or AI function based on the label information corresponding to the first information and a processing result of the AI model or AI function. The terminal device may determine the performance of the AI model or AI function in different manners. This is flexible.

In an optional implementation, the first information is included in a PDSCH; or the first information is included in a MAC PDU, and a MAC header of the MAC PDU indicates that the first information is the information used to determine the performance of the AI model or AI function. The first information may be information at a physical layer, information at a MAC layer, or information at a higher protocol layer. This is not limited herein.

In an optional implementation, the first information is included in the PDSCH, and the method further includes: skipping sending HARQ feedback information corresponding to the first information. Because the first information is not used for another purpose, the terminal device may not need to send the HARQ feedback information for the first information, so that transmission overheads are reduced.

In an optional implementation, the first information is included in the MAC PDU, and the method further includes: skipping delivering, by a MAC layer of the terminal device, the first information to an upper layer of the MAC layer; or discarding, by a MAC layer of the terminal device, the MAC PDU. Because the first information is not used for another purpose, the terminal device may not need to process the first information in a manner of processing common information. In this way, impact of the first information on a common service can be reduced.

In an optional implementation, the first information is included in the PDSCH, and the first information is broadcast information.

In an optional implementation, the first information is information dedicated to determining the performance of the AI model or AI function, or is service data. The first information may not be used for another purpose, but is used only to determine the performance of the AI model or AI function. Alternatively, the first information may be service data. This is equivalent to detecting the AI model or AI function by using the service data. In this case, there is no need to additionally set information dedicated to detecting the AI model or AI function, so that a model detection procedure can be simplified, and a utilization range of the service data can be expanded.

According to a second aspect, a second communication method is provided. The method may be performed by a network device, may be performed by another device including functions of the network device, or may be performed by a chip system (or a chip) or another functional module. The chip system or the functional module can implement the functions of the network device, and the chip system or the functional module is, for example, disposed in the network device. The network device is, for example, an access network device. For example, an implementation of the access network device is a base station. The method includes: sending first information, where the first information is used to determine performance of an AI model or AI function, and the AI model or AI function is used to implement a part of or all functions of a first receiver of a terminal device.

In an optional implementation, an information amount of the first information is less than or equal to a first threshold.

In an optional implementation, the method further includes: sending downlink control information to the terminal device, where the downlink control information is used to schedule the first information. The downlink control information includes first indication information, where the first indication information indicates that the first information is used to determine the performance of the AI model or AI function. Alternatively, the downlink control information is scrambled by using a first RNTI, where the first RNTI indicates that the first information is used to determine the performance of the AI model or AI function.

In an optional implementation, the downlink control information further indicates a transmission resource of the first information.

In an optional implementation, the downlink control information indicates the transmission resource of the first information in the following manner: The downlink control information indicates a location of the transmission resource of the first information. Alternatively, the downlink control information includes an index of the transmission resource of the first information. Alternatively, the downlink control information is further used to schedule second information, where the second information is service data or control information; and the downlink control information further indicates an offset of the transmission resource of the first information relative to a transmission resource of the second information.

In an optional implementation, the first information and the second information are separately and independently encoded.

In an optional implementation, a transmission resource of the first information is preconfigured by the network device, or is predefined.

In an optional implementation, the method further includes: receiving first request information from the terminal device, where the first request information is used to request to determine the performance of the AI model or AI function; or sending second indication information to the terminal device, where the second indication information indicates to determine the performance of the AI model or AI function.

In an optional implementation, the first request information is included in a MAC CE, UCI, or an RRC message.

In an optional implementation, the first request information further includes first assistance information, and the first assistance information is assistance information of information used to determine the performance of the AI model or AI function.

In an optional implementation, the method further includes: sending first configuration information to the terminal device, where the first configuration information is used to configure a parameter of the information used to determine the performance of the AI model or AI function.

In an optional implementation, the parameter of the information used to determine the performance of the AI model or AI function includes one or more of the following: type information of the information used to determine the performance of the AI model or AI function; information about a generation manner of the information used to determine the performance of the AI model or AI function; or information about a transmission resource of the information used to determine the performance of the AI model or AI function.

In an optional implementation, the first configuration information is further used to configure a truth value. Alternatively, the first configuration information is further used to configure a determining manner of a truth value. The truth value includes label information corresponding to the first information, and the label information is used by the terminal device to determine the performance of the AI model or AI function based on a processing result of the first information and the label information.

In an optional implementation, both the truth value and the first information are data, sequences, or reference signals.

In an optional implementation, the method further includes: receiving the first configuration information from the network device, where the first configuration information includes third indication information, and the third indication information indicates that the first information is used only to determine the performance of the AI model or AI function.

In an optional implementation, the first information is used only to determine the performance of the AI model or AI function.

In an optional implementation, the first configuration information is included in a unicast message; or the first configuration information is included in a multicast message; or the first configuration information is included in a broadcast message.

In an optional implementation, the broadcast message is a SIB or an RRC message.

In an optional implementation, the method further includes: receiving second assistance information from the terminal device, where the second assistance information indicates one or more of the following: the terminal device supporting the AI model or AI function, a manner in which the terminal device detects the AI model or AI function, and the assistance information of the information used to determine the performance of the AI model or AI function.

In an optional implementation, the assistance information of the information used to determine the performance of the AI model or AI function includes one or more of the following: type information of the AI model or AI function; a size of the information used to determine the performance of the AI model or AI function; the type information of the information used to determine the performance of the AI model or AI function; the information about the generation manner of the information used to determine the performance of the AI model or AI function; or the information about the sending manner of the information used to determine the performance of the AI model or AI function.

In an optional implementation, the first information is included in a PDSCH; or the first information is included in a MAC PDU, and a MAC header of the MAC PDU indicates that the first information is the information used to determine the performance of the AI model or AI function.

In an optional implementation, the first information is included in the PDSCH, and the first information is broadcast information.

In an optional implementation, the first information is information dedicated to determining the performance of the AI model or AI function, or is service data.

For technical effects brought by the second aspect or the optional implementations, refer to descriptions of technical effects of the first aspect or the corresponding implementations.

According to a third aspect, a communication apparatus is provided. The communication apparatus may be the terminal device according to the first aspect or the second aspect. The communication apparatus has a function of the foregoing terminal device. The communication apparatus is, for example, a terminal device, a large device including the terminal device, or a functional module in the terminal device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive first information from a network device. The processing unit is configured to process the first information by using an AI model or AI function, where the AI model or AI function is used to implement a part of or all functions of a first receiver. The processing unit is further configured to determine performance of the AI model or AI function based on a processing result of the first information.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the terminal device according to the first aspect or the second aspect.

According to a fourth aspect, a communication apparatus is provided. The communication apparatus may be the network device according to the first aspect or the second aspect. The communication apparatus has a function of the network device. The communication apparatus is, for example, the network device, a large device including the network device, or a functional module, for example, a baseband apparatus or a chip system, in the network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the fourth aspect.

In an optional implementation, the transceiver unit (or the sending unit) is configured to send first information, where the first information is used to determine performance of an AI model or AI function, and the AI model or AI function is used to implement a part of or all functions of a first receiver of a terminal device.

In an optional implementation, the communication apparatus further includes a storage unit (sometimes also referred to as a storage module). The processing unit is configured to be coupled to the storage unit, and execute a program or instructions in the storage unit, to enable the communication apparatus to perform a function of the network device according to the first aspect or the second aspect.

According to a fifth aspect, a communication apparatus is provided. The communication apparatus may be a first terminal device, or may be a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or the instructions, the communication apparatus is enabled to perform the method performed by the terminal device in the foregoing aspects.

According to a sixth aspect, a communication apparatus is provided. The communication apparatus may be a network device, or may be a chip or a chip system used in the network device. The communication apparatus includes a communication interface and a processor, and optionally, further includes a memory. The memory is configured to store a computer program. The processor is coupled to the memory and the communication interface. When the processor reads the computer program or the instructions, the communication apparatus is enabled to perform the method performed by the network device in the foregoing aspects.

According to a seventh aspect, a communication system is provided, and includes a terminal device and a network device. The terminal device is configured to perform the method performed by the terminal device in the foregoing aspects. The network device is configured to perform the method performed by the network device in the foregoing aspects. For example, the terminal device may be implemented by using the communication apparatus according to the third aspect or the fifth aspect, and the network device may be implemented by using the communication apparatus according to the fourth aspect or the sixth aspect.

According to an eighth aspect, a computer-readable storage medium is provided. The computer-readable storage medium is configured to store a computer program or instructions. When the computer program or the instructions are run, the method performed by the terminal device or the network device in the foregoing aspects is implemented.

According to a ninth aspect, a computer program product including instructions is provided. When the instructions are run on a computer, the methods in the foregoing aspects are implemented.

According to a tenth aspect, a chip system is provided, and includes a processor and an interface. The processor is configured to invoke instructions from the interface and run the instructions, to enable the chip system to implement the methods in the foregoing aspects.

### BRIEF DESCRIPTION OF DRAWINGS

FIG. 1 is a diagram of conventional receiving and processing algorithms;
FIG. 2 is a diagram of replacing a functional module in a conventional receiver with an AI model;
FIG. 3 is a diagram of a structure of a communication network to which an embodiment of this application is applied;
FIG. 4 is a flowchart of a communication method according to an embodiment of this application;
FIG. 5 is a diagram of a transmission resource of first information and a transmission resource of second information according to an embodiment of this application;
FIG. 6A and FIG. 6B are diagrams of two implementations of a first field and a second field according to an embodiment of this application;
FIG. 7 is a diagram of an apparatus according to an embodiment of this application; and
FIG. 8 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", namely, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance degrees, or the like of the plurality of objects. For example, first information and second information may be same information, or may be different information. In addition, such names do not indicate that the two pieces of information occupy different resources or have different sending sequences, transmitting ends/receiving ends, content, sizes, application scenarios, priorities, importance degrees, or the like. In addition, step numbers in embodiments described in this application are merely intended to distinguish between different steps, but are not intended to limit a sequence of the steps. For example, S401 may be performed before S402, or may be performed after S402, or may be simultaneously performed with S402.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios: a sensing scenario, cellular communication, device-to-device (device-to-device, D2D) communication, vehicle to everything (vehicle to everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, a smart office, a smart wearable, smart transportation, a smart city (smart city), an uncrewed aerial vehicle, a robot, and the like. The terminal device may be sometimes referred to as a user equipment (user equipment, UE), a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following provides descriptions by using an example in which the access network device is the base station. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

Application of AI in communication, especially in air interface, has been widely studied. For example, currently, a project has been initiated for research on the AI in the air interface, and research has been performed on a basic framework of using the AI in the air interface and several typical use cases/features of the AI in the air interface (AI CSI feedback, AI beam management, and AI positioning). A network side may use the AI for a UE side based on a granularity of an AI function or a granularity of an AI model. In embodiments of this application, the AI function is an AI feature/feature group enabled by one or more configurations (for example, a radio resource control (radio resource control, RRC) configuration), and these configurations may be determined by using an applicable condition supported by the UE. For example, if a CSI measurement resource configuration 1 and a CSI reporting configuration 1 meet an applicable condition for the UE to perform AI CSI feedback by using the AI, an AI CSI reporting function based on the CSI measurement resource configuration 1 and the CSI reporting configuration 1 may be referred to as an AI function. The AI model is a specific implementation of the AI function, and the AI model represents a mapping relationship between an input and an output of the model. The AI model may be a neural network, a linear regression model, a decision tree model, a support vector machine (support vector machine, SVM), a Bayesian network, a Q-learning model, another machine learning model, or the like. In embodiments of this application, a use process related to the AI function or the AI model may include at least one of the following: data collection (collecting training data and/or inference data), data preprocessing, model training (or referred to as model learning), model information release (configuring model information), model transfer/transmission, model management (activation, deactivation, switching, and rollback), model verification (verifying a trained model), model inference (using a trained model for inference), or inference result release. Inference may also be referred to as prediction. Optionally, the AI model may include a machine learning (machine learning, ML) model.

Considering that a future communication system is to be further closely combined with AI technologies, more conventional communication modules may be replaced by AI. An AI receiving algorithm is a possible direction.

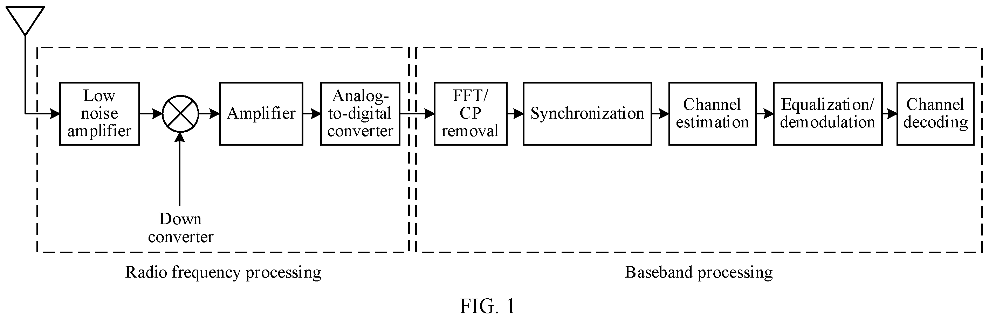

FIG. 1 is a diagram of conventional receiving and processing algorithms. Each small block in FIG. 1 may be understood as a functional module, or may be understood as one or more processing steps. According to FIG. 1, after a downlink signal is received, a typical processing algorithm includes radio frequency processing, baseband processing, and the like. In the radio frequency processing, a plurality of functional modules such as a low noise amplifier, a down converter, an amplifier, and an analog-to-digital converter are included. In the baseband processing, a plurality of functional modules such as fast Fourier transform (fast Fourier transform, FFT)/cyclic prefix (cyclic prefix, CP) removal, synchronization, channel estimation, equalization/demodulation, and channel decoding are included. A conventional receiver algorithm (for example, as shown in FIG. 1) adopts a modular design. To be specific, for a single functional module, a manner like establishing a mathematical model is used to solve for an optimal solution or a suboptimal solution of the functional module. For an entire receiver, the obtained solution is actually a local optimal solution, but is not necessarily a global optimal solution. If some or all functional modules in a conventional receiver are replaced with an AI model, for example, the functional modules shown in one or more small blocks shown in FIG. 1 are replaced with an AI model, the global optimal solution may be expected to be obtained for the entire receiver.

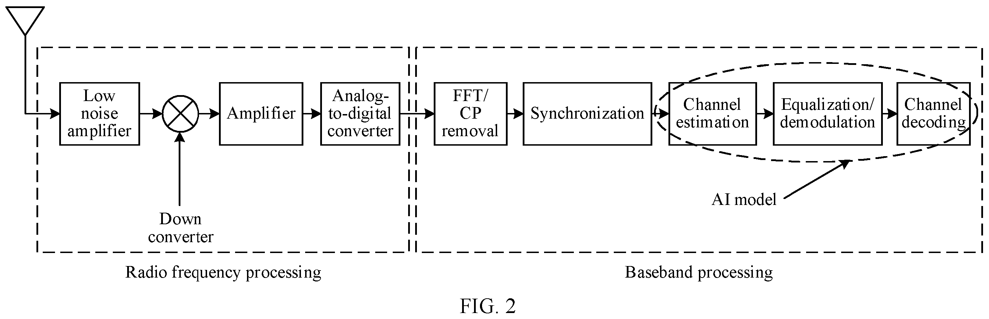

Any one or more functional modules in the conventional receiver may be replaced with an AI model. For example, in all functional modules included in the radio frequency processing and the baseband processing in FIG. 1, any one or more functional modules may be replaced with an AI model. One AI model may replace one functional module. Alternatively, one AI model may replace a plurality of functional modules. For example, an integrated manner is used, so that one AI model implements functions of a plurality of functional modules. For example, refer to FIG. 2. Three functional modules, namely, channel estimation, equalization/demodulation, and channel decoding, in a conventional receiver may be replaced with an AI model. For example, the three functional modules may be replaced with three AI models respectively, or the three functional modules may be replaced with one AI model. Functional modules such as channel estimation, equalization/demodulation, and channel decoding in FIG. 2 may also be referred to as different features. When the feature can be enabled, under a specific configuration, to be implemented by using AI, the feature may be referred to as a corresponding AI function. For example, under a bandwidth configuration 1, AI may be used to perform channel estimation. In this case, the channel estimation under the bandwidth configuration 1 may be referred to as an AI function. For another example, under a modulation scheme configuration 1, AI may be used to perform equalization/demodulation. In this case, the equalization/demodulation under the modulation scheme configuration 1 may be referred to as an AI function. One AI function may include one or more AI models, and all the AI models can implement the AI function. A specific AI model to be used may be selected and determined by a UE. In other words, the AI model is transparent to a network device, but the AI function is not transparent to the network device. In embodiments of this application, a management granularity of the network device that is used when the UE performs receiving by using AI is not limited. From a perspective of a network side, the UE may implement a functional module in a receiver by using a granularity of an AI model, or may implement a functional module in a receiver by using a granularity of an AI function.

When the AI model is used to implement a receiving function, performance of the AI model is closely related to receiving performance. However, there is no conclusion on how to determine the performance of the AI model used to implement the receiving function.

In view of this, after receiving first information, the UE in embodiments of this application may process the first information by using an AI model or AI function, so that the UE can determine performance of the AI model or AI function based on a processing result. In other words, for the AI model or AI function used to implement the receiving function, embodiments of this application provide a manner of determining the performance of the AI model or AI function. Further, if it is determined that the performance of the AI model or AI function is poor, a corresponding measure may be taken, for example, adjusting the performance of the AI model or AI function, disabling the AI model or AI function, reselecting an AI model or AI function, retraining the AI model or AI function, or falling back to a non-AI receiving function, so that the receiving performance can be improved.

The technical solutions provided in embodiments of this application may be applied to a 4th generation (4th generation, 4G) mobile communication technology system, for example, a long term evolution (long term evolution, LTE) system, may be applied to a 5G system, for example, a new radio (new radio, NR) system, or may be applied to a next generation mobile communication system or another similar communication system, for example, a 6th generation (6th generation, 6G) mobile communication technology system. This is not specifically limited. In addition, the technical solutions provided in embodiments of this application may be applied to a D2D scenario, for example, an NR-D2D scenario, or may be applied to a V2X scenario, for example, an NR-V2X scenario. For example, the technical solutions provided in embodiments of this application may be applied to a field like factory manufacturing, whole-house intelligence, intelligent driving, driving assistance, or an intelligent connected vehicle.

In current discussion, AI models in the air interface may be classified into two types: unilateral models and bilateral models. The bilateral model means that a network side (for example, a base station) and a UE side each have one model, and the models at both ends cooperate to complete one function. Therefore, the models at both ends may also be considered as two parts of an overall model. The unilateral model means that an AI model is deployed only on a network side or a UE side. In comparison with the bilateral model, the unilateral model is simpler in terms of model management and the like. The AI model or AI function used to implement the receiving function in embodiments of this application may be a unilateral model deployed on the UE side. It is clear that this is not limited either. For example, the AI model or AI function used to implement the receiving function in embodiments of this application may alternatively be a unilateral model deployed on another device (for example, the network side). Alternatively, if a transmitting end also participates in joint design, the AI model or AI function used to implement the receiving function in embodiments of this application may be a bilateral model deployed on two sides (for example, the network side and the UE side).

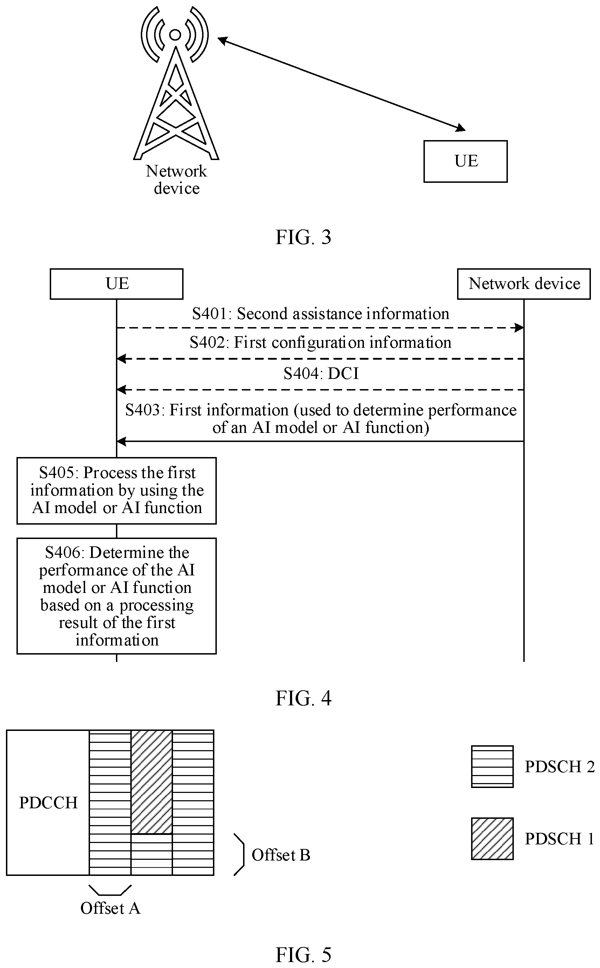

FIG. 3 shows an architecture of a communication network to which an embodiment of this application is applicable. FIG. 3 includes a network device and a UE, and the network device and the UE can communicate with each other. For example, an AI model or AI function is deployed on the UE, and the AI model or AI function can implement a receiving algorithm. For example, the UE may include a first receiver. Some or all functional modules in the first receiver may be replaced with the AI model or AI function, or the AI model or AI function may implement functions of some or all functional modules in the first receiver, or the AI model or AI function may implement a part of or all functions of the first receiver.

To better describe embodiments of this application, the following describes, with reference to the accompanying drawings, a method provided in embodiments of this application. In embodiments of this application, the two features "AI model" and "AI function" may be replaced with each other. In embodiments of this application, a device for "deploying" an AI model may be a device running the AI model. For example, "deploying" may also be understood as "running", "using", or "storing". For example, in FIG. 3, the UE is a device for deploying an AI model. In this case, the UE may run the AI model, and perform a process like inference by using the AI model, to obtain an inference result output by the AI model. In embodiments of this application, the AI model or AI function may be obtained through training by the UE. Alternatively, the AI model or AI function may be obtained through training by the network device. After the training is completed, the network device may send a parameter of the AI model or AI function to the UE, so that the UE can deploy the AI model or AI function. Alternatively, the AI model or AI function may be obtained through training by a third-party device. After the training is completed, the third-party device may send a parameter of the AI model or AI function to the UE, so that the UE can deploy the AI model or AI function. Alternatively, after the training is completed, the third-party device may send a parameter of the AI model or AI function to the network device, and then the network device sends the parameter of the AI model or AI function to the UE, so that the UE can deploy the AI model or AI function. The third-party device may be, for example, a network management system (operation, administration and maintenance, OAM), an over the top server (over the top server, OTT server), or another device.

Unless otherwise specified below, in the accompanying drawings corresponding to embodiments of this application, steps represented by dashed lines are all optional steps. Each method provided in embodiments of this application may be applied to the network architecture shown in FIG. 3. For example, a UE in embodiments of this application may be the UE in FIG. 3, and a network device in embodiments of this application may be the network device in FIG. 3.

An embodiment of this application provides a communication method. FIG. 4 is a flowchart of the method.

S401: A UE sends second assistance information to a network device. Correspondingly, the network device receives the second assistance information from the UE. The second assistance information may also have another name, for example, may be referred to as second requirement information or second expected information. This is not limited herein.

The UE may include a first receiver, and a part of or all functions of the first receiver may be implemented by using an AI model or AI function. For example, the AI model or AI function may implement functions of some or all functional modules in the first receiver. Therefore, the first receiver may also be referred to as an AI receiver, or may have another name. In this embodiment of this application, the UE may determine performance of the AI model or AI function.

In this embodiment of this application, information used to determine the performance of the AI model or AI function may be referred to as test information for short, may be referred to as monitoring information, or may have another name. The following uses the "test information" as an example for description. The second assistance information may include assistance information of the test information, or the network device may determine the test information based on the second assistance information and/or another factor, or the second assistance information may indicate an expectation of the UE for the test information. The test information may include first information to be described below. For example, the network device may determine the first information based on the second assistance information and/or other information, or the second assistance information may indicate an expectation of the UE for the first information.

Optionally, the second assistance information may indicate (or include) one or more of the following: the UE supporting the AI model or AI function, a manner in which the UE detects (monitors) the AI model or AI function, or the assistance information of the test information. Detecting the AI model or AI function may also be understood as monitoring the AI model or AI function. Optionally, whether the UE supports the AI model or AI function may also be related to a type of the UE, or may be determined by the network device based on registration information of the UE. In this case, whether the UE supports the AI model or AI function may not be indicated by the second assistance information. For example, the second assistance information may not indicate (or not include) the information "the UE supporting the AI model or AI function".

The manner in which the UE detects the AI model or AI function includes, for example, a direct detection manner (or referred to as a direct monitoring manner) or an indirect detection manner (or referred to as an indirect monitoring manner). The direct detection manner may be a manner of performing detection by using a truth value (or a label), where the truth value and the label may be a same feature, in other words, the "truth value" is the "label"; or the truth value may include the label. For example, the label may be original information. In the direct detection manner, after performing a series of processing processes such as modulation and mapping on the original information, the network device sends processed original information to the UE. The UE receives the processed original information, and processes the processed original information by using the AI model or AI function (for example, processes the processed original information by using the first receiver), for example, performs radio frequency processing and baseband processing, to obtain information A. The UE may determine the performance of the AI model or AI function based on the information A and the original information.

The indirect detection manner may not depend on a truth value (or a label). In the indirect detection manner, after performing a series of processing processes such as modulation and mapping on original information, the network device sends processed original information to the UE. The UE receives the processed original information, and processes the processed original information by using the AI model or AI function, to obtain information A. In addition, the UE may further include a second receiver, and the UE further processes the processed original information by using the second receiver, to obtain information B. The UE may determine the performance of the AI model or AI function based on the information A and the information B. All functions of the second receiver are not implemented by using any AI model or AI function. It may be understood as that the second receiver is a conventional receiver. For example, for an implementation of the second receiver, refer to FIG. 1. Optionally, the first receiver and the second receiver may be two different hardware circuits, or the two receivers may be hardware circuits that are partially the same, and are different in only some functional modules (software or hardware).

For example, if the UE includes the first receiver and the second receiver, the UE may support the direct detection manner or the indirect detection manner, or the UE supports both the two detection manners. Alternatively, if the UE includes the first receiver but does not include the second receiver, the UE may support the direct detection manner, but may not support the indirect detection manner.

Optionally, the manner in which the UE detects the AI model or AI function may also be related to the type of the UE, or may be determined by the network device based on the registration information of the UE. In this case, the second assistance information may not indicate the manner in which the UE detects the AI model or AI function either.

The assistance information of the test information may be used to determine the test information. For example, the assistance information includes (or indicates) one or more of the following: type information of the AI model or AI function, a size of the test information, type information of the test information, information about a generation manner of the test information, or information about a sending manner of the test information.

The type information of the AI model or AI function may indicate a function supported by the AI model or AI function. For example, Table 1 is an example of a receiver type. One row in Table 1 represents one type, and Table 1 includes types of functional modules in a conventional receiver and types of AI models or AI functions. For example, the type of the AI model or AI function in this embodiment of this application may be a type 1 or a type 2 in Table 1, or may be another type other than the types in Table 1. In addition, the type 1, the type 2, and the like in Table 1 are merely examples of type names. A corresponding type may also have another name, for example, may also be referred to as a type A, a type B, or the like. In addition, for a module function using AI, a condition for supporting AI may be further included, to enable a configuration of the corresponding AI function.

**Table 1**

| Type | Function | Traditional or AI | Conditions for supporting AI | Independent or integrated |
|---|---|---|---|---|
| 1 | Baseband function-channel estimation | AI | 1. Channel bandwidth: 20 MHz; | Integration |
| | | | 2. Moving speed: 0 to 30 km/h; | |
| | | | 3. Modulation schemes (quadrature phase shift keying (quadrature phase shift keying, QPSK), 16 quadrature amplitude modulation (quadrature amplitude modulation, QAM), and 64 QAM). | |
| 2 | Baseband function-equalization/demodulation | AI | | |
| 3 | Baseband function-channel decoding | Conventional | | N/A |
| 4 | Baseband function-synchronization | Conventional | | |
| 5 | Radio frequency function-power amplifier (power amplifier, PA) non-linear compensation | Conventional | | |
| 6 | Radio frequency function-in-phase (in-phase, I) and quadrature (quadrature, Q) imbalance compensation | Conventional | | |
| 7 | Baseband function-equalization/demodulation | AI | 1. Modulation schemes: QPSK, 16 QAM, and 64 QAM; | Independent |
| | | | 2. 1~4 stream transmission. | |
| 8 | Baseband function-channel decoding | AI | Code block size<4000 bits (bits) | Integration |

In Table 1, the type 1 is a type of the AI model or AI function, and a function corresponding to the type is the channel estimation function in the baseband processing. The type 2, the type 7, or the type 8 is another type of the AI model or AI function, where a function corresponding to the type 2 or the type 7 is the equalization/demodulation function in the baseband processing, and a function corresponding to the type 8 is the channel decoding function in the baseband processing. The type 3 to the type 6 are several types of the functional modules in the conventional receiver. For example, a function corresponding to the type 3 is the channel decoding function in the baseband processing. The "integration" in Table 1 indicates that an AI model or AI function of this type may implement a function of one functional module in the first receiver, or may implement functions of a plurality of functional modules in the first receiver. In other words, it is regarded as the functions of the plurality of functional modules in the first receiver being integrated into one AI model or AI function. The "independent" in Table 1 indicates that an AI model or AI function of this type may implement a corresponding baseband or radio frequency function in the first receiver. For example, the equalization/demodulation function in the type 2 may be implemented by using one AI model or AI function after being integrated with the channel estimation. An input of the AI model or AI function may be a received signal, and an output of the AI model or AI function may be an equalized/demodulated signal. For another example, the equalization/demodulation function in the type 7 implements only the equalization/demodulation function of the AI, and still needs to depend on an output result of the previous channel estimation module. An input of the AI model or AI function is a received signal and an estimated channel, and an output of the AI model or AI function is an equalized/demodulated signal.

For example, the network device may determine a parameter of the test information based on the type information of the AI model or AI function, and may determine the test information based on the parameter. For example, if the type information of the AI model or AI function is the type 2 in Table 1, the network device may determine that a type of the test information is a predefined bit stream (or sequence). The type information of the test information may be a parameter of the test information. For another example, if the type information of the AI model or AI function is the type 8 in Table 1, the network device may determine that a type of the test information is a transport block (transport block, TB). A bit in the TB may be generated in a predefined manner, or may be generated in a non-predefined manner (for example, randomly generated).

Alternatively, the type information of the AI model or AI function used by the UE may be predefined in a protocol, or the UE has reported the type information of the AI model or AI function to the network device in advance (for example, the UE reports the type information of the AI model or AI function in a registration process), or the type information of the AI model or AI function is preconfigured in the network device and the UE. In this case, the assistance information of the test information may not indicate the type information of the AI model or AI function either.

The size of the test information may be measured based on a data size. For example, the size may be a size (size) of a transport block TB occupied by the test information, or a quantity of bytes (bytes) or bits (bits) of a TB occupied by the test information. Alternatively, the size of the test information may be a length of a sequence or a quantity of bits of a sequence. Alternatively, the size of the test information may be measured based on a transmission resource occupied by the test information. For example, the size may be a quantity of resource elements (resource elements, REs), a quantity of resource blocks (resource blocks, RBs), a quantity of orthogonal frequency division multiplexing (orthogonal frequency division multiplexing, OFDM) symbols (symbols), or the like occupied by the test information. The size of the test information may be a specific value, in other words, the size of the test information may be equal to the value. Alternatively, the size of the test information may be a value range, in other words, the size of the test information is within the value range. In a process of detecting the AI model or AI function, the network device may send the test information once, or may send the test information a plurality of times. In this case, the size of the test information may indicate a size of the test information sent once, or may indicate a total size or an average size of the test information sent a plurality of times.

Alternatively, the size of the test information may be predefined in a protocol, determined by the network device, preconfigured in the network device and the UE, or determined by the UE and the network device through negotiation. In this case, the assistance information of the test information may not indicate the size of the test information either.

Optionally, an information amount of the test information (namely, the size of the test information) may be less than or equal to a first threshold. For example, an information amount of test information (for example, first test information to be described below) sent by the network device once may be less than or equal to the first threshold. Alternatively, a sum of information amounts of test information sent by the network device a plurality of times may be less than or equal to the first threshold. That is, the information amount of the test information may be small, so that receiving and processing complexity of the UE can be reduced. For example, the first threshold is configured by the network device, preconfigured in the network device, or predefined in a protocol. For example, when determining the first threshold, the network device may determine the first threshold based on the assistance information of the test information in the second assistance information. For example, the network device sets the first threshold to be less than or equal to the size of the test information in the assistance information of the test information.

The type information of the test information may indicate the type of the test information. For example, the type of the test information may be a reference signal, a sequence (or a bit stream), data (or a physical downlink control channel (physical downlink shared channel, PDSCH)), a TB, or control information. Alternatively, the type information of the test information may be predefined in a protocol, determined by the network device, preconfigured in the network device and the UE, or determined by the UE and the network device through negotiation. In this case, the assistance information of the test information may not indicate the type information of the test information either. The reference signal includes, for example, one or more of the following reference signals: a channel state information (channel state information, CSI)-reference signal (reference signal, RS), a demodulation reference signal (demodulation reference signal, DMRS), a positioning reference signal (positioning reference signal, PRS), a phase tracking reference signal (phase tracking reference signal, PTRS), a physical broadcast channel (physical broadcast channel, PBCH), a synchronization signal block (synchronization signal block, SSB), or the like.

The information about the generation manner of the test information may indicate the generation manner of the test information, for example, indicate a protocol layer used to generate the test information, and/or indicate that test data is randomly generated or generated according to a first rule. The protocol layer used to generate the test information is, for example, a physical (PHY) layer, a media access control (media access control, MAC) layer, or any other protocol layer above the MAC layer, for example, a radio link control (radio link control, RLC) layer, or the like. Optionally, if the information about the generation manner indicates that the test data is generated according to the first rule, the second assistance information may further include information about the first rule. For example, if the first rule includes one or more formulas, the second assistance information may include the one or more formulas, so that the network device can generate the test data according to the first rule. Alternatively, the first rule may be predefined in a protocol, preconfigured in the network device, or determined by the UE and the network device through negotiation. In this case, the second assistance information may not need to include the information about the first rule.

Alternatively, the information about the generation manner of the test information may be predefined in a protocol, determined by the network device, preconfigured in the network device and the UE, or determined by the UE and the network device through negotiation. In this case, the assistance information of the test information may not indicate the information about the generation manner of the test information either.

The information about the sending manner of the test information may indicate the sending manner of the test information, for example, indicate one or more of the following: a transmission resource of the test information, a sending periodicity or a sending time interval of the test information, a modulation scheme of the test information, an encoding scheme of the test information, a precoding scheme of the test information, or a multi-user (multi-user, MU) pairing manner of the test information. The transmission resource of the test information is a resource used to send the test information, and may include a time domain resource and/or a frequency domain resource. For example, the transmission resource of the test information is indicated by the second assistance information, which is equivalent to that the UE and the network device may agree on the transmission resource of the test information. In this case, the network device may send the test information by using the agreed resource, and the UE may also receive the test information by using the agreed resource.

Alternatively, the information about the sending manner of the test information may be predefined in a protocol, determined by the network device, preconfigured in the network device and the UE, or determined by the UE and the network device through negotiation. In this case, the assistance information of the test information may not indicate the information about the sending manner of the test information either.

Optionally, the first receiver of the UE may use one AI model or AI function, or may use a plurality of AI models or AI functions. For example, different functional modules in the first receiver may be replaced with different AI models or AI functions. Alternatively, optionally, the UE may further include a third receiver. In addition to that some or all functional modules in the first receiver may be replaced with an AI model or AI function, some or all functional modules in the third receiver may also be replaced with an AI model or AI function. The AI model or AI function used to replace the functional module in the first receiver and the AI model or AI function used to replace the functional module in the third receiver may be different AI models or AI functions. In this case, the UE may report one piece of assistance information (for example, the second assistance information) for all AI models or AI functions used by the UE. The test information determined by the network device based on the second assistance information may be used for any AI model or AI function of the UE. Alternatively, the UE reports assistance information only for one of AI models or AI functions used by the UE. For example, the UE reports the second assistance information for one AI model or AI function in the first receiver. The test information determined by the network device based on the second assistance information may be used for the AI model or AI function in the first receiver of the UE, but cannot be used for another AI model or AI function used by the UE. Alternatively, the UE may separately report assistance information for all AI models or AI functions used by the UE. For example, the UE reports the second assistance information for one AI model or AI function in the first receiver, and reports other assistance information for another AI model or AI function. The network device may separately determine test information based on the different assistance information, and the test information is also separately applied to the corresponding AI models or AI functions.

Optionally, whether the UE detects the AI model or AI function, or whether the UE is to use the test data may be related to factors such as a capability of the UE and/or a capability of the AI function or AI function. For example, for an AI model or AI function with high generalization, model detection may not need to be frequently performed. For example, in this case, the UE may perform model detection by using common service data, for example, perform detection in the indirect detection manner. Because the common service data is used, the network device may not need to generate the test information. Therefore, the UE may not need to send the second assistance information. Alternatively, for an AI model or AI function with a weak generalization capability, model detection may need to be frequently performed. In this case, the UE may send the second assistance information to the network device.

It can be learned from the foregoing descriptions that the network device may alternatively not need to obtain the second assistance information, or the network device may obtain the second assistance information in a manner other than S401. Therefore, S401 is an optional step.

S402: The network device sends first configuration information to the UE. Correspondingly, the UE receives the first configuration information from the network device.

The first configuration information may be used to configure a parameter of the test information. For example, the parameter of the test information configured by using the first configuration information may include (or indicate) one or more of the following: the type information of the test information, the size of the test information, the information about the generation manner of the test information, the information about the sending manner of the test information, third indication information, the truth value, or information about a determining manner of the truth value.

A type of the test information configured by using the first configuration information may be the same as or different from a type of the test information indicated by the second assistance information. For example, if the network device receives the second assistance information, and configures the parameter of the test information only based on the second assistance information, the type of the test information configured by using the first configuration information may be the same as the type of the test information indicated by the second assistance information. For another example, if the network device does not receive the second assistance information, the type of the test information configured by using the first configuration information may be the same as or different from the type of the test information indicated by the second assistance information. Alternatively, if the network device receives the second assistance information, but the network device configures the parameter of the test information based on the second assistance information and other information (for example, the network device receives assistance information from a plurality of UEs, and the assistance information of each UE separately indicates a parameter of the test information expected by the UE, so that the network device can configure the parameter of the test information based on the assistance information of the plurality of UEs), the type of the test information configured by using the first configuration information may be the same as or different from the type of the test information indicated by the second assistance information.

Similarly, the size of the test information configured by using the first configuration information may be the same as or different from the size of the test information indicated by the second assistance information. For details, refer to the descriptions of the type information of the test information in the previous paragraph.

Similarly, the information about the generation manner of the test information configured by using the first configuration information may be the same as or different from the information about the generation manner of the test information indicated by the second assistance information. For details, refer to the descriptions of the type information of the test information in the previous paragraph.

Similarly, the information about the sending manner of the test information configured by using the first configuration information may be the same as or different from the information about the sending manner of the test information indicated by the second assistance information. For details, refer to the foregoing descriptions of the type information of the test information. Optionally, for example, the information about the sending manner of the test information configured by using the first configuration information may indicate a transmission resource of the test information. For example, if the UE and the network device agree on the transmission resource of the test information, the network device may select a part or all of the agreed resource, and indicate the resource to the UE by using the first configuration information. In this way, the network device may send the test information by using the resource indicated by the first configuration information, and the UE may also receive the test information by using the resource indicated by the first configuration information. The first configuration information may directly indicate a location of the transmission resource, for example, include information about a time domain resource and/or information about a frequency domain resource. Alternatively, when the UE and the network device agree on the transmission resource, the UE and the network device may set an index (index) for each transmission resource, and the network device may indicate one or more indexes by using the first configuration information, to indicate one or more transmission resources. In this indication manner, overheads of the first configuration information can be reduced.

The third indication information may indicate that the test information is only used to determine the performance of the AI model or AI function. It may also be understood as that, by using the third indication information, the UE may determine that the test information is used only to determine information about the AI model or AI function, and is not used for another purpose. For example, the test information is a reference signal. The reference signal is generally used for channel estimation and the like. If a reference signal is test information, the UE may determine that the reference signal is used only to determine the performance of the AI model or AI function, and is not used for channel estimation and the like (or the UE is not required or expected to perform channel estimation based on the reference signal). By using the third indication information, the test information may be distinguished from common information (for example, service data or a reference signal used for performance like channel estimation), so that the test information does not affect a normal service. Alternatively, the test information is used only to determine the performance of the AI model or AI function, and is not used for another purpose. This feature may be predefined in a protocol, preconfigured in the UE, or determined by the UE and the network device through negotiation. As long as the UE determines that one piece of information is test information, the UE can determine that the information is used only to determine the performance of the AI model or AI function. In this case, the first configuration information may not need to include the third indication information.

The determining manner of the truth value may be used to determine the truth value. In other words, even if the UE does not directly obtain the truth value, after knowing the determining manner of the truth value, the UE can also determine the truth value based on the determining manner of the truth value. The foregoing describes two model detection manners: the direct detection manner and the indirect detection manner. If the UE uses the indirect detection manner, the first configuration information may not need to be used to configure the truth value or the determining manner of the truth value. Alternatively, if the UE uses the direct detection manner, the first configuration information may be used to configure the truth value or the determining manner of the truth value, to enable the UE to obtain the truth value. In this way, the UE can determine the performance of the AI model or AI function based on the truth value and a processing result of the AI model or AI function for the test information. The truth value and the test information are information of a same type. For example, both the truth value and the test information may be data, control information, sequences, or reference signals.

Optionally, if the UE uses the direct detection manner, the truth value may be determined by using the second receiver. Alternatively, it is understood as that the determining manner of the truth value may be determining by using the second receiver. For example, the UE processes the first information by using the second receiver, and may obtain a processing result of the second receiver. If the second receiver correctly processes the first information, the UE may consider that the second receiver determines the truth value. For example, the truth value is the processing result of the second receiver, or the truth value is determined based on the processing result of the second receiver.

The first configuration information may be sent in a unicast manner, for example, included in a unicast message. Alternatively, the first configuration information may be sent in a multicast manner, for example, included in a multicast message. Alternatively, the first configuration information may be sent in a broadcast manner, for example, included in a broadcast message. For example, if the network device determines the first configuration information for a specific UE, and the test information configured by using the first configuration information is used to determine performance of an AI model or AI function of the UE, the first configuration information may be sent to the UE in the unicast manner. Alternatively, if the network device determines the first configuration information for a group of UEs, and the test information configured by using the first configuration information may be used to determine performance of an AI model or AI function of each UE in the group of UEs, the first configuration information may be sent to the group of UEs in the multicast manner. Alternatively, if the network device determines the first configuration information for a plurality of UEs (there may be no group relationship among the plurality of UEs, for example, the plurality of UEs are some or all UEs covered by the network device), and the test information configured by using the first configuration information may be used to determine performance of an AI model or AI function of the plurality of UEs, the first configuration information may be sent in the broadcast manner.

If the first configuration information is included in the broadcast message, optionally, the first configuration information is, for example, included in a message at an RRC layer. For example, the first configuration information is included in a system information block (system information block, SIB), for example, a SIB message like a SIB1 or a SIB2. For another example, the broadcast message is included in a common RRC configuration like a PDSCH-common (common)-configuration (config) in an RRC message.

Alternatively, the parameter of the test information may be predefined in a protocol, preconfigured in the network device and the UE, or determined by the UE and the network device through negotiation. In this case, S402 may not need to be performed. Therefore, S402 is an optional step.

S403: The network device sends the first information to the UE. Correspondingly, the UE receives the first information from the network device.

The first information may be the test information. For example, the first information is test information sent by the network device once. After entering a model detection stage, the network device may send the test information, and the UE may receive the test information from the network device. After sending the second assistance information in S401 to the network device, the UE may consider that the UE enters the model detection stage or starts to receive the test information. After receiving the second assistance information in S401, the network device may consider that the network device enters the model detection stage or starts to send the test information. Alternatively, after receiving the first configuration information in S402, the UE may consider that the UE enters the model detection stage or starts to receive the test information. After sending the first configuration information in S402 to the UE, the network device may consider that the network device enters the model detection stage or starts to send the test information. Alternatively, the UE and the network device may determine, in another manner, when the UE and the network device enter the model detection stage, or determine when the UE and the network device start to receive and send the test information.

For example, the UE may send first request information to the network device, and the first request information may be used to request to determine the performance of the AI model or AI function. If the UE uses only one AI model or AI function, the first request information may be used to request to determine performance of the AI model or AI function. Alternatively, if the UE uses a plurality of AI models or AI functions, the first request information may be used to request to determine performance of some or all of the AI models or AI functions. After sending the first request information, the UE may consider that the UE enters the model detection stage or starts to receive the test information. After receiving the first request information, the network device may consider that the network device enters the model detection stage or starts to send the test information. Optionally, the first request information may be included in a MAC control element (control element, CE), uplink control information (uplink control information, UCI), a radio resource control (radio resource control, RRC) message, or a message of another type. The RRC message is, for example, a UE assistance information (UE assistance information) message, or may be another message at the RRC layer.

Optionally, the UE may send the first request information to the network device when a first condition is met, where the first condition may be a model detection condition. The first condition may be determined by the UE, sent by the network device to the first UE, predefined in a protocol, preconfigured in the UE, determined by the UE and the network device through negotiation, or the like. For example, the first condition includes one or more of the following: a reception error rate of using the first receiver within first duration is greater than or equal to a second threshold; a reception error rate of using the first receiver within first duration is greater than or equal to a second threshold, and signal quality is greater than a third threshold; the UE has switched a scenario; or a detection periodicity expires.

The reception error rate of the first receiver is, for example, an error rate of a final decoding result obtained by using the first receiver, or a demodulation error rate obtained by using the first receiver. For example, the second threshold is configured by the network device, preconfigured in the UE, determined by the UE and the network device through negotiation, or predefined in a protocol.

For example, if the reception error rate of using the first receiver within the first duration is greater than or equal to the second threshold, the UE may test the performance of the AI model or AI function. If the performance of the AI model or AI function is poor, the UE may switch to another AI model or AI function, or use the second receiver to perform receiving, to improve a reception accuracy rate. Alternatively, if the reception error rate of using the first receiver within the first duration is greater than or equal to the second threshold, and the signal quality is greater than the third threshold, it is likely that the first receiver is faulty. Therefore, the UE may test the performance of the AI model or AI function. If the performance of the AI model or AI function is poor, the UE may switch to another AI model or AI function, or use the second receiver to perform receiving, to improve a reception accuracy rate. For example, the third threshold is configured by the network device, preconfigured in the UE, determined by the UE and the network device through negotiation, or predefined in a protocol.

Alternatively, the UE has switched a scenario. For example, the UE moves from indoor to outdoor. In this case, performance of an AI receiver (for example, the first receiver) may not be ensured. In this case, the UE may test the performance of the AI model or AI function. If the performance of the AI model or AI function is poor, the UE may switch to another AI model or AI function, or use the second receiver to perform receiving, to improve a reception accuracy rate in a new scenario.

Alternatively, periodic detection is configured for the UE, and the performance of the AI model or AI function needs to be periodically detected. When the detection periodicity expires, the UE may trigger to enter a model detection process. For example, the detection periodicity is configured by the network device, preconfigured in the UE and the network device, determined by the UE and the network device through negotiation, or predefined in a protocol.

Optionally, the first request information may further include first assistance information, and the first assistance information may include the assistance information of the test information. It may also be understood as that the network device may determine the test information based on the first assistance information. Content included in the first assistance information may be similar to content included in the foregoing second assistance information. For example, the first assistance information may indicate (or include) one or more of the following: the UE supporting the AI model or AI function, the manner in which the UE detects the AI model or AI function, or the assistance information of the test information. A value of a specific parameter included in the first assistance information may be the same as or different from a value of a specific parameter included in the second assistance information. For example, both the first assistance information and the second assistance information include the assistance information of the test information, and both the assistance information of the test information included in the first assistance information and the assistance information of the test information included the second assistance information include the information about the generation manner of the test information. The information about the generation manner of the test information included in the first assistance information may indicate that the test information is generated by using the physical layer, and the information about the generation manner of the test information included in the second assistance information may also indicate that the test information is generated by using the physical layer. Alternatively, the information about the generation manner of the test information included in the first assistance information may indicate that the test information is generated by using the MAC layer, and the information about the generation manner of the test information included in the second assistance information may indicate that the test information is generated by using the physical layer.

The first assistance information and the second assistance information may be information independent of each other. For example, the UE does not report the second assistance information, but reports the first assistance information. Alternatively, the UE does not report the first assistance information, but reports the second assistance information. Alternatively, the UE has reported the second assistance information, but there is a time interval between time when the UE reports the second assistance information and time when the UE expects to perform model detection, and some expectations of the UE may change during this period. Therefore, the UE may indicate, by using the first assistance information, a latest expectation of the UE for the test information.

Alternatively, the first assistance information may be used to modify or supplement the second assistance information. For example, the UE has reported the second assistance information, but there is a time interval between time when the UE reports the second assistance information and time when the UE expects to perform model detection, and some expectations of the UE may change during this period. Therefore, the UE may modify, by using the first assistance information, values of some or all parameters in the second assistance information, or may supplement, by using the first assistance information, content that is not included in the second assistance information.

If the network device further receives the first assistance information of the UE when the network device has delivered the first configuration information, and the first assistance information is different from the second assistance information, optionally, the network device may re-configure a parameter of the test information based on the first assistance information to obtain second configuration information, and send the second configuration information. In this case, the UE may receive the test information by using the second configuration information. A parameter included in the second configuration information is similar to a parameter included in the first configuration information, but values of the parameters may be different. A sending manner of the second configuration information is similar to a sending manner of the first configuration information.

Optionally, if the first request information is included in the MAC CE or the RRC message, the first request information may include the first assistance information. Alternatively, if the first request information is included in the UCI, the first request information may not include the first assistance information. This is because a capacity of the MAC CE or the RRC message is relatively large, and can carry more information, but a capacity of the UCI is relatively small, and may not be able to carry more content. Alternatively, whether the first request information includes the first assistance information may be irrelevant to a signaling type, but is related to an expectation of the UE.

Alternatively, the UE may not need to send the first request information to the network device, but the network device may send second indication information to the UE, and the second indication information may indicate to determine the performance of the AI model or AI function. If the UE uses only one AI model or AI function, the second indication information may indicate to determine performance of the AI model or AI function. Alternatively, if the UE uses a plurality of AI models or AI functions, the second indication information may indicate to determine performance of some or all of the AI models or AI functions. After receiving the second indication information, the UE may consider that the UE enters the model detection stage or starts to receive the test information. After sending the second indication information, the network device may consider that the network device enters the model detection stage or starts to send the test information. Optionally, the second indication information may be included in a MAC CE, downlink control information (downlink control information, DCI), an RRC message, or a message of another type.

Alternatively, information indicating to start to determine the performance of the AI model or AI function does not need to be sent between the UE and the network device. In other words, transmission of information used to start the model detection stage does not need to be performed between the UE and the network device, but the UE and the network device enter the model detection stage in another manner. For example, when a second condition is met, both the UE and the network device may determine that the UE and the network device enter the model detection stage, or determine that the UE and the network device start to receive and send the test information. The second condition may be preconfigured in the UE and the network device, preconfigured by the network device, determined by the UE and the network device through negotiation, predefined in a protocol, or the like. The second condition may be the same as or different from the foregoing first condition.

The first information may be generated by using different protocol layers. For example, the first information is generated by using the physical layer. In this case, the first information is, for example, a PDSCH, or the first information is carried in a PDSCH. Alternatively, the first information is generated by using the MAC layer. In this case, the first information is, for example, a MAC protocol data unit (protocol data unit, PDU), or the first information is included in a MAC PDU. Alternatively, the first information may be generated by using a higher protocol layer. In this case, an implementation of the first information is correspondingly different.

In addition, the first information may be sent in a unicast manner, for example, included in a unicast message. Alternatively, the first information may be sent in a multicast manner, for example, included in a multicast message. Alternatively, the first information may be sent in a broadcast manner, for example, included in a broadcast message. For example, the first information is used by a specific UE to determine performance of an AI model or AI function used by the UE. In this case, the first information may be sent to the UE in the unicast manner. For another example, the first information may be used by a group of UEs to determine performance of an AI model or AI function used by each UE in the group of UEs. In this case, the first information may be sent to the group of UEs in the multicast manner. For still another example, the first information may be used for performance of an AI model or AI function used by each of a plurality of UEs (there may be no group relationship among the plurality of UEs, for example, the plurality of UEs are all or some UEs covered by the network device). In this case, the first information may be sent in the broadcast manner.

Optionally, before S403, the method may further include S404. The network device may send DCI to the UE. Correspondingly, the UE receives the DCI from the network device. The DCI may be used to schedule the first information. In addition, the DCI may further indicate that the first information is the test information.

In an example in which the DCI indicates that the first information is the test information, the DCI includes first indication information, and the first indication information may indicate that the first information is the test information, or indicate that the first information is used to determine the performance of the AI model or AI function. This manner may be considered as an explicit indication manner. Optionally, if the UE uses a plurality of AI models or AI functions, the DCI may indicate performance of a specific AI model or AI function for which the first information is used. For example, the first indication information is carried in a first field. The first field may be a newly added field in the DCI, or a reserved (reserved) field in the DCI. The first field may occupy one or more bits (bits). For example, the first field occupies one bit. If a value of the first field is "0", it indicates that the first information is not the test information, or it indicates that the first information is not used to determine the performance of the AI model or AI function. Alternatively, if a value of the first field is "1", it indicates that the first information is the test information, or it indicates that the first information is used to determine the performance of the AI model or AI function.

In another example in which the DCI indicates that the first information is the test information, the DCI is scrambled by using a first radio network temporary identifier (radio network temporary identifier, RNTI), and the first RNTI may indicate that the first information is the test information, or indicate that the first information is used to determine the performance of the AI model or AI function. This manner may be considered as an implicit indication manner. Optionally, if the UE uses a plurality of AI models or AI functions, different AI models or AI functions in the plurality of AI models or AI functions may be indicated by different RNTIs, or some of the AI models or AI functions may be indicated by one RNTI. In this embodiment of this application, a correspondence between the AI model or AI function and the RNTI may be configured by the network device (for example, the correspondence is included in the first configuration information), preconfigured in the network device and the UE, determined by the UE and the network device through negotiation, or predefined in a protocol.

In still another example in which the DCI indicates that the first information is the test information, the DCI indicates, by using an information amount of scheduled information, whether the first information is the test information. For example, if the information amount of the information scheduled by using the DCI is less than a fourth threshold, it indicates that the information scheduled by using the DCI is the test information. Alternatively, if the information amount of the information scheduled by using the DCI is greater than or equal to a fourth threshold, it indicates that the information scheduled by using the DCI is not the test information. This manner may be considered as an implicit indication manner. If the UE sends the second assistance information to the network device, and the second assistance information indicates the size of the test information, the fourth threshold is, for example, less than or equal to the size of the test information indicated by the second assistance information. Alternatively, if the UE sends the first assistance information to the network device, and the first assistance information indicates the size of the test information, the fourth threshold is, for example, less than or equal to the size of the test information indicated by the first assistance information. For example, if the test information is generated by using the MAC layer, or is generated by using another protocol layer higher than the MAC layer, the DCI may use this indication manner, or may use either of the foregoing two indication manners. Alternatively, if the test information is generated by using the physical layer, the DCI may use either of the foregoing two indication manners.

Optionally, the DCI may further indicate a transmission resource of the first information. For example, the DCI may indicate a location of the transmission resource of the first information, for example, indicate a time domain resource and/or a frequency domain resource of the first information. Alternatively, the DCI may include an index of the transmission resource of the first information. For example, if the UE and the network device agree on the transmission resource of the test information, and separately set an index for the agreed resource, the DCI may include the corresponding index. In this way, the UE can determine a specific resource included in the transmission resource of the first information. Alternatively, the DCI may indicate an offset (offset) of the transmission resource of the first information relative to a transmission resource of second information, where the second information is information scheduled by using the DCI. In other words, the DCI may be used to schedule the first information and the second information, and the second information is common service data, control information, or the like. This is equivalent to that the DCI is used to schedule the common service data or the control information and the test information. In this case, the DCI may indicate the transmission resource of the second information, and the DCI may indicate the offset of the transmission resource of the first information relative to the transmission resource of the second information, so that the transmission resource of the first information is indicated. The offset of the transmission resource of the first information relative to the transmission resource of the second information, for example, includes an offset of a time domain resource of the first information relative to a time domain resource of the second information, and/or an offset of a frequency domain resource of the first information relative to a frequency domain resource of the second information. The offset of the time domain resource of the first information relative to the time domain resource of the second information is, for example, an offset of a start time domain resource of the first information relative to a start time domain resource of the second information, or an offset of an end time domain resource of the first information relative to an end time domain resource of the second information. The offset of the frequency domain resource of the first information relative to the frequency domain resource of the second information is, for example, an offset of a start frequency domain resource of the first information relative to a start frequency domain resource of the second information, or an offset of an end frequency domain resource of the first information relative to an end frequency domain resource of the second information. If the DCI is used to schedule the first information and the second information, when sending the second information, the network device may perform rate matching on the second information on the transmission resource of the first information, and map the second information without using the transmission resource of the first information. Optionally, the network device may separately and independently encode the first information and the second information, for example, independently perform channel encoding on the first information and the second information, to reduce impact of the test information on a service.

FIG. 5 is an example of the transmission resource of the first information and the transmission resource of the second information. In FIG. 5, a horizontal axis represents time, and a vertical axis represents frequency. For example, a "/" part in FIG. 5 represents a PDSCH 1, and the PDSCH 1 represents the first information. A horizontal line part in FIG. 5 represents a PDSCH 2, and the PDSCH 2 represents the second information. In addition, a physical downlink control channel (physical downlink control channel, PDCCH) shown in FIG. 5 may include the DCI. The DCI may indicate an offset (an offset A shown in FIG. 5) of a start time domain location of the PDSCH 1 relative to a start time domain location of the PDSCH 2. For example, the offset A is one or more OFDM symbols or one or more slots (slots). In addition, the DCI may further indicate an offset (an offset B shown in FIG. 5) of a start frequency domain location of the PDSCH 1 relative to a start frequency domain location of the PDSCH 2. For example, the offset B is one or more subcarriers.

Alternatively, the DCI may not need to indicate the transmission resource of the first information. For example, the DCI is further used to schedule the second information, and the DCI indicates the transmission resource of the second information. An offset of the transmission resource of the first information relative to the transmission resource of the second information may be preconfigured by the network device, preconfigured in the UE and the network device, or predefined in a protocol. In this case, the DCI may not need to indicate the transmission resource of the first information, and the UE can determine the transmission resource of the first information based on the transmission resource of the second information and the predicted offset. For another example, the transmission resource of the first information is preconfigured by the network device or predefined in a protocol. For example, the network device preconfigures or the protocol predefines one transmission resource, or the network device preconfigures or the protocol predefines one transmission resource and a resource periodicity. The transmission resource is, for example, a transmission resource in a 1^{st} resource periodicity. In this case, the UE can determine the transmission resource of the first information based on the information preconfigured by the network device or predefined in the protocol, and the DCI does not need to indicate the transmission resource of the first information.

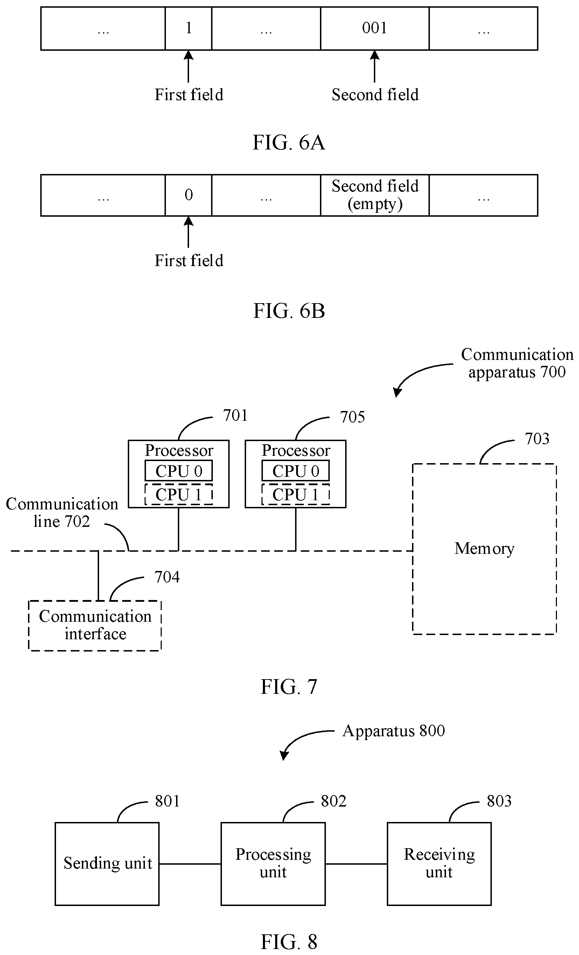

For example, the DCI includes the first indication information. Optionally, if the first indication information indicates that the first information is the test information, the DCI may still indicate the transmission resource of the first information. Alternatively, if the first information indicates that the first information is not the test information, the DCI may not need to indicate the transmission resource of the first information. For example, the DCI carries the first indication information by using the first field, and indicates the transmission resource of the first information by using a second field. The second field may be a newly added field in the DCI or a reserved field in the DCI. FIG. 6A and FIG. 6B are two examples of the DCI. In FIG. 6A, if a value of the first indication information is "1", indicating that the first information is the test information, the second field is not empty. In this case, the second field indicates the transmission resource of the first information. The second field may occupy one or more bits. In FIG. 6A, an example in which the second field occupies three bits and a value of the second field is "001" is used. This is not actually limited thereto. In FIG. 6B, if a value of the first indication information is "0", indicating that the first information is not the test information, the second field may be empty (or the DCI may not include the second field). In this case, the second field does not indicate the transmission resource of the first information.

For example, if the first information is data, a reference signal, or a sequence, the network device may send the DCI to the UE. Alternatively, if the first information is control information, the control information is, for example, the DCI, in other words, the first information may indicate that the first information is the test information.

For another example, if the first information is information at the physical layer, the network device may send the DCI to the UE, and the DCI may indicate whether the first information is the test information. Alternatively, if the first information is information at the MAC layer, the network device may send the DCI to the UE, and the DCI may indicate whether the first information is the test information, or the DCI may not indicate whether the first information is the test information, or the network device may not send the DCI to the UE. If the first information is information at the MAC layer, the first information is, for example, included in a MAC PDU, or the first information is a MAC PDU. If the first information is information at the MAC layer, a manner in which the network device processes the first information at the physical layer is consistent with a manner in which the network device processes common information at the physical layer. However, if the network device needs to send the first information and the common information at the same time (for example, the network device sends the first information and the second information at the same time, where the second information is common data, control information, or the like), the first information and the second information may be separately included in different MAC PDUs. Optionally, a MAC PDU including the first information may indicate whether the first information is the test information. For example, a MAC header of the MAC PDU may indicate that the first information is the test information, or indicate that the first information is information used to determine the performance of the AI model or AI function. For example, the network device may add fourth indication information to the MAC header, to indicate, by using the fourth indication information, that the first information is the test information, or indicate that the first information is the information used to determine the performance of the AI model or AI function. The fourth indication information occupies, for example, one or more bits. An indication manner of the fourth indication information may be similar to that of the first indication information. Details are not described again.

S405: The UE processes the first information by using the AI model or AI function (or by using the first receiver).

S406: The UE determines the performance of the AI model or AI function based on a processing result of the first information.

The following describes S405 and S406 together.

As described above, the test information may be generated by different protocol layers, and the UE may process the test information generated by the different protocol layers in different manners, which are described by using the following examples. If the test information is data or control information, a manner in which the network device processes the test information is similar to a manner in which the network device processes common data or control information. For example, the network device may also perform processes such as channel encoding, modulation, and mapping on the test information. Similarly, if the test information is a reference signal or a sequence, a manner in which the network device processes the test information is also similar to a manner in which the network device processes a common reference signal or sequence.
1. The test information is information at the physical layer, or the test information is information generated by the physical layer of the network device. For example, the test information is included in a PDSCH, or the first information is a PDSCH.

The first information in the test information is used as an example for description. If the UE determines that the first information is the test information, the UE may process the first information by using a to-be-tested AI model or AI function, to obtain a processing result. The AI model or AI function may replace one or more functional modules in the first receiver, and the "processing" described herein varies with different replaced functional modules. For example, a structure when the functional module in the first receiver is not replaced with the AI model or AI function is the structure shown in FIG. 1. For example, the functional module replaced with the AI model or AI function includes the analog-to-digital converter module in the radio frequency processing in FIG. 1, but does not include a module following the analog-to-digital converter module. In this case, the processing herein is analog-to-digital conversion, and an obtained processing result refers to an analog-to-digital conversion result. For another example, the functional module replaced with the AI model or AI function includes the channel estimation module in the baseband processing in FIG. 1, but does not include a module (for example, the equalization/demodulation module) following the channel estimation module. In this case, the processing herein is channel estimation, and an obtained processing result refers to a channel estimation result. For another example, the functional module replaced with the AI model or AI function includes the equalization/demodulation module in the baseband processing in FIG. 1, but does not include a module (for example, the channel decoding module) following the equalization/demodulation module. In this case, the processing herein is demodulation, and an obtained processing result refers to a demodulation result. For still another example, the functional module replaced with the AI model or AI function includes the channel decoding module in the baseband processing in FIG. 1. In this case, the processing herein is channel decoding, and an obtained processing result is a channel decoding result.

If the UE uses the direct detection manner, after obtaining the processing result, the UE may determine the performance of the AI model or AI function based on the processing result and the truth value (or the label). For example, if the functional module replaced with the AI model or AI function is the equalization/demodulation module in the baseband processing of the first receiver, but a module (for example, the channel decoding module) following the equalization/demodulation module is not replaced, the truth value may be a data block (or a bit stream) on which channel encoding is performed and modulation is not performed, and the processing result may be a data block (or a bit stream) on which equalization/demodulation is performed by using the AI model or AI function and channel encoding is not performed. When the direct detection manner is used, the UE may compare whether each bit in the processed data block is the same as a corresponding bit in the truth value, to collect statistics on a quantity of error bits. Through one or more direct detections, a bit error rate of the direct detection can be further statistically calculated. If the bit error rate is greater than a threshold A (where the threshold A may be determined by the UE, configured by the network device, predefined in a protocol, or determined by the UE and the network device through negotiation), it is regarded as the performance of the AI model or AI function not meeting a requirement.

Alternatively, if the UE uses the indirect detection manner, in addition to processing the first information by using the AI model or AI function (or the first receiver), the UE further processes the first information by using the second receiver. In this case, the UE may obtain a processing result of the first receiver (or the AI model or AI function), and obtain a processing result of the second receiver. The UE may determine the performance of the AI model or AI function based on the two processing results. For example, in each indirect detection, the UE separately collect statistics on whether first information processed by using the first receiver and first information processed by using the second receiver can pass a cyclic redundancy check (cyclic redundancy check, CRC), for example, separately collect statistics on a quantity of CRC check errors, namely, a quantity of block errors. After one or more indirect detections, block error rates obtained through processing by the two receivers may be further separately and statistically calculated. If a block error rate obtained through processing by the first receiver is greater than a fifth threshold, and a block error rate obtained through processing by the second receiver is less than a sixth threshold, it is regarded as the performance of the AI model or AI function not meeting a requirement, where the fifth threshold and the sixth threshold may be the same or different.

If the test information is information at the physical layer, and the test information is no longer used for another purpose in addition to determining the performance of the AI model or AI function, optionally, the UE may not need to send hybrid automatic repeat request (hybrid automatic repeat request, HARQ) feedback information corresponding to the test information, where the HARQ feedback information includes, for example, an acknowledgment (ACK) or a negative acknowledgment (NACK). For example, if the first information is the test information, the UE may not need to send HARQ feedback information corresponding to the first information. Because the test information is not used for another purpose, and only has a function of determining the performance of the AI model or AI function for the UE, but may not have more functions for the network device, the network device may not care about whether the UE successfully receives the test information. Therefore, the UE may not need to send the HARQ feedback information corresponding to the test information, so that signaling overheads can be reduced. Optionally, the physical layer may not deliver the processing result of the test information to the MAC layer of the UE, and/or the physical layer may discard the processing result of the test information.

2. The test information is information at the MAC layer, or the test information is information generated by the MAC layer of the network device. For example, the test information is included in a MAC PDU, or the test information is a MAC PDU.

The first information in the test information is used as an example for description. As described above, for the test information at the MAC layer, the network device may indicate, by using the DCI, whether the first information is the test information, and indicate, by using the MAC header, whether the first information is the test information. Alternatively, the network device may indicate, by using the DCI, whether the first information is the test information, but does not indicate, by using the MAC header, whether the first information is the test information. Alternatively, the network device may indicate, by using the MAC header, whether the first information is the test information, but does not indicate, by using the DCI, whether the first information is the test information. A processing process of the UE may vary with different indication manners, which are separately described below.
(1) The network device indicates, by using the DCI, whether the first information is the test information, and indicates, by using the MAC header, whether the first information is the test information.

The physical layer of the UE first receives the first information, and the physical layer may determine, based on the indication of the DCI, whether the first information is the test information. If the UE uses the direct detection manner, and the DCI indicates that the first information is the test information, the physical layer may process the first information by using the AI model or AI function (or by using the first receiver) to obtain a processing result. The physical layer may deliver the processing result to the MAC layer of the UE, or the physical layer of the UE may deliver the processing result and the truth value (or the label) to the MAC layer. The MAC layer may determine, based on a MAC header of the processing result, whether the first information is the test information. If it is determined that the first information is the test information, the MAC layer may determine the performance of the AI model or AI function based on the processing result and the truth value (or the label). Optionally, because the first information is the test information, the MAC layer may no longer deliver the processing result of the first information to an upper layer of the MAC layer, and/or the MAC layer may discard the processing result of the first information.

Alternatively, if the UE uses the indirect detection manner, and the DCI indicates that the first information is the test information, the physical layer may process the first information by using the AI model or AI function (or by using the first receiver) to obtain a processing result A, and the physical layer may process the first information by using the second receiver to obtain a processing result B. The physical layer may deliver the processing result A and the processing result B to the MAC layer of the UE. The MAC layer may determine, based on a MAC header of the processing result A, whether the first information is the test information. For example, if it is determined that the first information is the test information, the MAC layer may determine the performance of the AI model or AI function based on the processing result A and the processing result B. Optionally, because the first information is the test information, the MAC layer may no longer deliver the two processing results of the first information to an upper layer of the MAC layer, and/or the MAC layer may discard the processing result A and the processing result B of the first information.

Alternatively, if the DCI indicates that the first information is not the test information, the physical layer may process the first information by using the AI model or AI function (or by using the first receiver) to obtain a processing result A, or process the first information by using the second receiver to obtain a processing result B. The physical layer may deliver the processing result A or the processing result B to the MAC layer of the UE. The MAC layer may determine, based on a MAC header of the processing result A, whether the first information is the test information. For example, if it is determined that the first information is not the test information, the MAC layer may continue to process the first information based on the processing result A or the processing result B, and deliver a processing result obtained by the MAC layer to an upper layer of the MAC layer, for example, the RLC layer.

(2) The network device indicates, by using the DCI, whether the first information is the test information, and does not indicate, by using the MAC header, whether the first information is the test information.

The physical layer of the UE first receives the first information, and the physical layer may determine, based on the indication of the DCI, whether the first information is the test information. If the UE uses the direct detection manner, and the DCI indicates that the first information is the test information, the physical layer may process the first information by using the AI model or AI function (or by using the first receiver) to obtain a processing result. The physical layer may determine the performance of the AI model or AI function based on the processing result and the truth value (or the label). Because the MAC header does not indicate whether the first information is the test information, in other words, the MAC layer does not need to determine whether the first information is the test information, optionally, the physical layer may not deliver the processing result to the MAC layer, and/or the physical layer may discard the processing result.

Alternatively, if the UE uses the indirect detection manner, and the DCI indicates that the first information is the test information, the physical layer may process the first information by using the AI model or AI function (or by using the first receiver) to obtain a processing result A, and the physical layer may process the first information by using the second receiver to obtain a processing result B. The physical layer may determine the performance of the AI model or AI function based on the processing result A and the processing result B. Because the MAC header does not indicate whether the first information is the test information, in other words, the MAC layer does not need to determine whether the first information is the test information, optionally, the physical layer may not deliver the processing result A and the processing result B to the MAC layer, and/or the physical layer may discard the processing result A and the processing result B.

Alternatively, if the DCI indicates that the first information is not the test information, the physical layer may process the first information by using the AI model or AI function (or by using the first receiver) to obtain a processing result A, or process the first information by using the second receiver to obtain a processing result B. The physical layer may deliver the processing result A or the processing result B to the MAC layer of the UE. The MAC layer may continue to process the first information based on the processing result A or the processing result B, and deliver a processing result obtained by the MAC layer to an upper layer of the MAC layer, for example, the RLC layer.

(3) The network device indicates, by using the MAC header, whether the first information is the test information, and does not indicate, by using the DCI, whether the first information is the test information.

The physical layer of the UE first receives the first information, and the physical layer cannot determine whether the first information is the test information. Therefore, the physical layer processes the first information in a manner of processing common information. For example, the physical layer first processes the first information by using the AI model or AI function (or by using the first receiver). If the processing succeeds, the physical layer may deliver an obtained processing result to the MAC layer of the UE. The MAC layer may determine, based on a MAC header of the first information, whether the first information is the test information. If the first information is the test information, the MAC layer may determine the performance of the AI model or AI function by using the processing result. For example, if the first information is the test information, and the UE uses the direct detection manner, the MAC layer may determine the performance of the AI model or AI function based on the processing result and the truth value (or the label). Alternatively, if the first information is the test information, and the UE uses the indirect detection manner, in this case, although the MAC layer does not receive the processing result of the second receiver for the first information, with the processing result of the AI model or AI function for the first information, the MAC layer can also determine the performance of the AI model or AI function based on the processing result. Alternatively, if the MAC layer determines that the first information is not the test information, the MAC layer may continue to process the first information based on the processing result, and deliver a processing result obtained by the MAC layer to an upper layer of the MAC layer, for example, the RLC layer. If the first information is the test information, optionally, the MAC layer may no longer deliver the processing result of the first information to an upper layer of the MAC layer, and/or the MAC layer may discard the processing result of the first information.

Alternatively, the physical layer first processes the first information by using the AI model or AI function (or by using the first receiver). If the processing fails, the physical layer may further process the first information by using the second receiver. The physical layer may deliver a processing result (referred to as a processing result B) of the second receiver to the MAC layer of the UE. Optionally, the physical layer may also deliver the processing result (for example, referred to as a processing result A, where the processing result A is failed or erroneous) of the AI model or AI function to the MAC layer of the UE. In this case, the MAC layer may receive the two processing results. The MAC layer may determine, based on the MAC header of the first information, whether the first information is the test information. If the first information is the test information, the MAC layer may determine the performance of the AI model or AI function by using the processing result. For example, if the first information is the test information, and the UE uses the direct detection manner, the MAC layer may determine the performance of the AI model or AI function based on the processing result A and the truth value (or the label). Alternatively, if the first information is the test information, and the UE uses the indirect detection manner, the MAC layer may determine the performance of the AI model or AI function based on the processing result A and the processing result B. Alternatively, if the MAC layer determines that the first information is not the test information, the MAC layer may continue to process the first information based on the processing result A or the processing result B, and deliver a processing result obtained by the MAC layer to an upper layer of the MAC layer, for example, the RLC layer. If the first information is the test information, optionally, the MAC layer may no longer deliver the processing result A and the processing result B of the first information to an upper layer of the MAC layer, and/or the MAC layer may discard the processing result A and the processing result B of the first information.

Alternatively, after receiving the first information, the physical layer may process the first information by using the AI model or AI function (or by using the first receiver) to obtain a processing result A, and process the first information by using the second receiver to obtain a processing result B. The physical layer may deliver the processing result A and the processing result B to the MAC layer of the UE, and the MAC layer may receive the two processing results. The MAC layer may determine, based on the MAC header of the first information, whether the first information is the test information. If the first information is the test information, the MAC layer may determine the performance of the AI model or AI function by using the processing result. For example, if the first information is the test information, and the UE uses the direct detection manner, the MAC layer may determine the performance of the AI model or AI function based on the processing result A and the truth value (or the label). Alternatively, if the first information is the test information, and the UE uses the indirect detection manner, the MAC layer may determine the performance of the AI model or AI function based on the processing result A and the processing result B. Alternatively, if the MAC layer determines that the first information is not the test information, the MAC layer may continue to process the first information based on the processing result A or the processing result B, and deliver a processing result obtained by the MAC layer to an upper layer of the MAC layer, for example, the RLC layer. If the first information is the test information, optionally, the MAC layer may no longer deliver the processing result (for example, the processing result A or the processing result B) of the first information to an upper layer of the MAC layer, and/or the MAC layer may discard the processing result of the first information.

The foregoing describes some manners of processing the first information by the UE. During actual application, this is not limited to the foregoing processing manners. For example, the test information may alternatively be generated by the RLC layer or a higher protocol layer, and a processing manner of the UE may also be different. This is not specifically limited.

For example, in a pre-monitoring (or pre-detection) scenario, the test information may be information at the MAC layer or information at a higher layer. The pre-monitoring scenario is a scenario in which the UE currently uses the second receiver, but the UE may be about to switch to the first receiver, or the UE expects to determine performance of the first receiver, so that in a process of using the second receiver, the UE may detect the performance of the first receiver (or the AI model or AI function) by using the test information.

For another example, in a non-pre-monitoring (or non-pre-detection) scenario, the test information may be information at the physical layer. For example, the non-pre-monitoring scenario is a scenario in which the UE currently uses the first receiver (or the AI model or AI function), so that in a process of using the first receiver, the UE may detect performance of the first receiver (or the AI model or AI function) by using the test information. For example, if it is determined that the performance of the first receiver is poor, the UE may consider adjusting the performance of the first receiver or switching the receiver, to improve receiving performance.

Optionally, the network device may send the test information within the first duration, and when the first duration ends, the network device may stop sending the test information. Alternatively, if the UE determines the performance of the AI model or AI function, or the UE considers that the performance of the AI model or AI function does not need to be further determined, the UE may send a stop indication to the network device. The network device receives the stop indication, and may stop sending the test information. For example, although the first duration does not end, the network device receives the stop indication, and the network device may stop sending the test information, so that transmission overheads of the test information can be reduced.

In the foregoing descriptions, the test information dedicated to determining the performance of the AI model or AI function is set in this embodiment of this application, so that the performance of the AI model or AI function can be determined, and impact on another service can be reduced. Alternatively, the test information dedicated to determining the performance of the AI model or AI function may not be set in this embodiment of this application. For example, the performance of the AI model or AI function is determined by using common information (for example, service data, control information, or a reference signal or a sequence of another function). For example, the foregoing first information may be common information. If this manner is used, steps for determining the test information (or determining a configuration of the test information) may not be performed between the UE and the network device, for example, steps such as S401, S402, and S404 do not need to be performed. This can reduce an interaction process between the UE and the network device, reduce the signaling overheads, and improve model detection efficiency.

After receiving the first information, the UE in this embodiment of this application may process the first information by using the AI model or AI function, so that the UE can determine the performance of the AI model or AI function based on the processing result. In other words, for an AI model or AI function used to implement a receiving function, this embodiment of this application provides a manner of determining performance of the AI model or AI function. Optionally, if it is determined that the performance of the AI model or AI function is poor, a corresponding measure may be taken, for example, adjusting the performance of the AI model or AI function, disabling the AI model or AI function, reselecting an AI model or AI function, retraining the AI model or AI function, or falling back to a non-AI receiving function, so that the receiving performance can be improved. Optionally, if it is determined that the performance of the AI model or AI function is poor, a measure to be taken may be determined by the UE. Alternatively, after determining the performance of the AI model or AI function, the UE may further report the performance of the AI model or AI function to the network device, so that the network device may indicate the UE to perform a specific measure. The test information in this embodiment of this application may be generated by using different protocol layers. This is flexible. In addition, the test information in this embodiment of this application may be sent in the unicast manner, or may be sent in the multicast manner, the broadcast manner, or the like, so that the model detection process can be performed in a single UE, or may be performed in parallel in a plurality of UEs. This is flexible. In addition, in comparison with the unicast manner, using the multicast or broadcast manner to send the test information helps reduce the signaling overheads.

FIG. 7 is a diagram of a structure of a communication apparatus according to an embodiment of this application. The communication apparatus 700 may be the UE in the embodiment shown in FIG. 4 or a circuit system of the UE, and is configured to implement the method corresponding to the UE in the foregoing method embodiment. Alternatively, the communication apparatus 700 may be the network device in the embodiment shown in FIG. 4 or a circuit system of the network device, and is configured to implement the method corresponding to the network device in the foregoing method embodiment. For example, a circuit system is a chip system.

The communication apparatus 700 includes at least one processor 701. The processor 701 may be configured to perform internal processing of the apparatus, to implement a specific control processing function. Optionally, the processor 701 includes instructions. Optionally, the processor 701 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 700 includes one or more memories 703, configured to store instructions. Optionally, the memory 703 may further store data. The processor and the memory may be separately disposed, or may be integrated together.

Optionally, the communication apparatus 700 includes a communication line 702 and at least one communication interface 704. Because the memory 703, the communication line 702, and the communication interface 704 are all optional, the memory 703, the communication line 702, and the communication interface 704 are all represented by dashed lines in FIG. 7.

Optionally, the communication apparatus 700 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 700 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 701 may include a general-purpose central processing unit (central processing unit, CPU), a microprocessor, an application specific integrated circuit (application specific integrated circuit, ASIC), or one or more integrated circuits configured to control program execution of solutions of this application.

The communication line 702 may include a path, to transfer information between the foregoing components.

The communication interface 704 uses any transceiver-type apparatus, to communicate with another device or a communication network like the Ethernet, a radio access network (radio access network, RAN), a wireless local area network (wireless local area network, WLAN), or a wired access network.

The memory 703 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that is accessible to a computer, but is not limited thereto. The memory 703 may exist independently and is connected to the processor 701 through the communication line 702. Alternatively, the memory 703 may be integrated with the processor 701.

The memory 703 is configured to store computer-executable instructions for performing the solutions in this application, and the processor 701 controls the execution. The processor 701 is configured to execute the computer-executable instructions stored in the memory 703, to implement the steps performed by the UE or the network device in the embodiment shown in FIG. 4.

Optionally, the computer-executable instructions in this embodiment of this application may also be referred to as application program code. This is not specifically limited in this embodiment of this application.

During specific implementation, in an embodiment, the processor 701 may include one or more CPUs such as a CPU 0 and a CPU 1 in FIG. 7.

During specific implementation, in an embodiment, the communication apparatus 700 may include a plurality of processors, for example, the processor 701 and a processor 705 shown in FIG. 7. Each of the processors may be a single-core (single-CPU) processor, or may be a multicore (multi-CPU) processor. The processor herein may be one or more devices, circuits, and/or processing cores configured to process data (for example, computer program instructions).

When the apparatus shown in FIG. 7 is a chip, for example, a chip of the UE or a chip of the network device, the chip includes the processor 701 (which may further include the processor 705), the communication line 702, and the communication interface 704. Optionally, the chip may include the memory 703. Specifically, the communication interface 704 may be an input interface, a pin, a circuit, or the like. The memory 703 may be a register, a cache, or the like. The processor 701 and the processor 705 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when the functional modules are obtained through division based on corresponding functions, FIG. 8 is a diagram of an apparatus. An apparatus 800 may be the UE or the network device in the foregoing method embodiments, or a chip in the UE or a chip in the network device. The apparatus 800 includes a sending unit 801, a processing unit 802, and a receiving unit 803.

It should be understood that the apparatus 800 may be configured to implement the steps performed by the UE or the network device in the communication method in embodiments of this application. For related features, refer to the embodiment shown in FIG. 4. Details are not described herein again.

Optionally, functions/implementation processes of the sending unit 801, the receiving unit 803, and the processing unit 802 in FIG. 8 may be implemented by the processor 701 in FIG. 7 by invoking the computer-executable instructions stored in the memory 703. Alternatively, the function/the implementation process of the processing unit 802 in FIG. 8 may be implemented by the processor 701 in FIG. 7 by invoking the computer-executable instructions stored in the memory 703, and the functions/the implementation processes of the sending unit 801 and the receiving unit 803 in FIG. 8 may be implemented by the communication interface 704 in FIG. 7.

Optionally, when the apparatus 800 is a chip or a circuit, the functions/the implementation processes of the sending unit 801 and the receiving unit 803 may alternatively be implemented by a pin, a circuit, or the like.

This application further provides a computer-readable storage medium. The computer-readable storage medium stores a computer program or instructions. When the computer program or the instructions are run, the method performed by the UE or the network device in the foregoing method embodiment is implemented. In this way, the functions in the foregoing embodiments may be implemented in a form of a software functional unit and sold or used as an independent product. Based on such an understanding, technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the UE or the network device in any one of the foregoing method embodiments.

An embodiment of this application further provides a processing apparatus, including a processor and an interface. The processor is configured to perform the method performed by the UE or the network device in any one of the foregoing method embodiments.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by the computer, or a data storage device, for example, a server, a data center, or the like integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, for example, a digital signal processor and a microprocessor, a plurality of microprocessors, one or more microprocessors with a digital signal processor core, or any other similar configuration.

Steps of the method or algorithm described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information to the storage medium. Alternatively, the storage medium may be integrated into a processor. The processor and the storage medium may be disposed in an ASIC, and the ASIC may be disposed in a terminal device. Alternatively, the processor and the storage medium may be disposed in different parts of a terminal device.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps used to implement a specific function in one or more procedures in the flowchart and/or in one or more blocks in the block diagram.

Mutual reference may be made to content in embodiments of this application. Unless otherwise specified or a logical conflict occurs, terms and/or descriptions in different embodiments are consistent and may be referenced to each other. Technical features in different embodiments may be combined to form a new embodiment based on an internal logical relationship of the technical features.

It may be understood that, in embodiments of this application, the UE and/or the network device may perform a part or all of the steps in embodiments of this application. The steps or operations are merely examples. In embodiments of this application, other operations or variations of various operations may be further performed. In addition, the steps may be performed in a sequence different from a sequence presented in embodiments of this application, and not all the operations in embodiments of this application may be performed.

## Claims

1. A communication method, applied to a terminal device, wherein the terminal device comprises a first receiver, and the method comprises:
receiving first information from a network device;
processing the first information by using an artificial intelligence AI model or AI function, wherein the AI model or AI function is used to implement a part of or all functions of the first receiver; and
determining performance of the AI model or AI function based on a processing result of the first information.

2. The method according to claim 1, wherein an information amount of the first information is less than or equal to a first threshold.

3. The method according to claim 1 or 2, wherein the method further comprises:
receiving downlink control information from the network device, wherein the downlink control information is used to schedule the first information, wherein
the downlink control information comprises first indication information, and the first indication information indicates that the first information is used to determine the performance of the AI model or AI function; or
the downlink control information is scrambled by using a first radio network temporary identifier RNTI, and the first RNTI indicates that the first information is used to determine the performance of the AI model or AI function.

4. The method according to claim 3, wherein
the downlink control information further indicates a transmission resource of the first information.

5. The method according to claim 4, wherein the downlink control information indicates the transmission resource of the first information in the following manner:
the downlink control information indicates a location of the transmission resource of the first information; or
the downlink control information comprises an index of the transmission resource of the first information; or
the downlink control information is further used to schedule second information, wherein the second information is service data or control information; and the downlink control information further indicates an offset of the transmission resource of the first information relative to a transmission resource of the second information.

6. The method according to claim 5, wherein the first information and the second information are separately and independently encoded.

7. The method according to any one of claims 1 to 3, wherein
a transmission resource of the first information is preconfigured by the network device, or is predefined.

8. The method according to any one of claims 1 to 7, wherein the method further comprises:
sending first request information to the network device, wherein the first request information is used to request to determine the performance of the AI model or AI function; or
receiving second indication information from the network device, wherein the second indication information indicates to determine the performance of the AI model or AI function.

9. The method according to claim 8, wherein the first request information is comprised in a media access control MAC control element CE, uplink control information UCI, or a radio resource control RRC message.

10. The method according to claim 8 or 9, wherein the first request information further comprises first assistance information, and the first assistance information is assistance information of information used to determine the performance of the AI model or AI function.

11. The method according to any one of claims 1 to 10, wherein the method further comprises:
receiving first configuration information from the network device, wherein the first configuration information is used to configure a parameter of the information used to determine the performance of the AI model or AI function.

12. The method according to claim 11, wherein the parameter of the information used to determine the performance of the AI model or AI function comprises one or more of the following:
type information of the information used to determine the performance of the AI model or AI function;
information about a generation manner of the information used to determine the performance of the AI model or AI function; or
information about a sending manner of the information used to determine the performance of the AI model or AI function.

13. The method according to claim 11 or 12, wherein
the first configuration information is further used to configure a truth value; or
the first configuration information is further used to configure a determining manner of a truth value, wherein
the truth value comprises label information corresponding to the first information, and the label information is used by the terminal device to determine the performance of the AI model or AI function based on the processing result of the first information and the label information.

14. The method according to claim 13, wherein both the truth value and the first information are data, sequences, or reference signals.

15. The method according to any one of claims 1 to 14, wherein the method further comprises:
receiving the first configuration information from the network device, wherein the first configuration information comprises third indication information, and the third indication information indicates that the first information is used only to determine the performance of the AI model or AI function.

16. The method according to any one of claims 1 to 14, wherein the first information is used only to determine the performance of the AI model or AI function.

17. The method according to any one of claims 11 to 16, wherein
the first configuration information is comprised in a unicast message; or
the first configuration information is comprised in a multicast message; or
the first configuration information is comprised in a broadcast message.

18. The method according to claim 17, wherein the broadcast message is a system information block SIB or an RRC message.

19. The method according to any one of claims 1 to 18, wherein the method further comprises:
sending second assistance information to the network device, wherein the second assistance information indicates one or more of the following: the terminal device supporting the AI model or AI function, a manner in which the terminal device detects the AI model or AI function, or the assistance information of the information used to determine the performance of the AI model or AI function.

20. The method according to claim 19, wherein the assistance information of the information used to determine the performance of the AI model or AI function comprises one or more of the following:
type information of the AI model or AI function;
a size of the information used to determine the performance of the AI model or AI function;
the type information of the information used to determine the performance of the AI model or AI function;
the information about the generation manner of the information used to determine the performance of the AI model or AI function; or
the information about the sending manner of the information used to determine the performance of the AI model or AI function.

21. The method according to any one of claims 1 to 20, wherein the terminal device further comprises a second receiver, and the determining the performance of the AI model or AI function based on the processing result of the first information comprises:
separately processing the first information by using the AI model or AI function and the second receiver, and determining the performance of the AI model or AI function based on a processing result of the AI model or AI function and a processing result of the second receiver; or
processing the first information by using the AI model or AI function, and determining the performance of the AI model or AI function based on the label information corresponding to the first information and a processing result of the AI model or AI function.

22. The method according to any one of claims 1 to 21, wherein
the first information is comprised in a physical downlink shared channel PDSCH; or
the first information is comprised in a MAC protocol data unit PDU, and a MAC header of the MAC PDU indicates that the first information is the information used to determine the performance of the AI model or AI function.

23. The method according to claim 22, wherein the first information is comprised in the PDSCH, and the method further comprises:
skipping sending hybrid automatic repeat request HARQ feedback information corresponding to the first information.

24. The method according to claim 22, wherein the first information is comprised in the MAC PDU, and the method further comprises:
skipping, by a MAC layer of the terminal device, delivering the first information to an upper layer of the MAC layer; or
discarding, by a MAC layer of the terminal device, the MAC PDU.

25. The method according to claim 22 or 23, wherein the first information is comprised in the PDSCH, and the first information is broadcast information.

26. The method according to any one of claims 1 to 25, wherein the first information is information dedicated to determining the performance of the AI model or AI function, or is service data.

27. A communication method, applied to a network device, wherein the method comprises:
sending first information, wherein the first information is used to determine performance of an AI model or AI function, and the AI model or AI function is used to implement a part of or all functions of a first receiver of a terminal device.

28. The method according to claim 27, wherein an information amount of the first information is less than or equal to a first threshold.

29. The method according to claim 27 or 28, wherein the method further comprises:
sending downlink control information to the terminal device, wherein the downlink control information is used to schedule the first information, wherein
the downlink control information comprises first indication information, and the first indication information indicates that the first information is used to determine the performance of the AI model or AI function; or
the downlink control information is scrambled by using a first RNTI, and the first RNTI indicates that the first information is used to determine the performance of the AI model or AI function.

30. A communication apparatus, wherein the communication apparatus comprises a processing unit and a transceiver unit, and the processing unit is coupled to the transceiver unit, to perform the method according to any one of claims 1 to 26, or perform the method according to any one of claims 27 to 29.

31. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 26, or enable the communication apparatus to perform the method according to any one of claims 27 to 29.

32. A computer-readable storage medium, wherein the computer-readable storage medium is configured to store a computer program, and when the computer program is run on a computer, the computer is enabled to perform the method according to any one of claims 1 to 26, or the computer is enabled to perform the method according to any one of claims 27 to 29.

33. A computer program product, wherein the computer program product comprises a computer program, and when the computer program is run on a computer, the computer is enabled to perform the method according to any one of claims 1 to 26, or the computer is enabled to perform the method according to any one of claims 27 to 29.

34. A chip system, wherein the chip system comprises:
a processor and an interface, wherein the processor is configured to invoke instructions from the interface and run the instructions, and when the processor executes the instructions, the method according to any one of claims 1 to 26 is implemented, or the method according to any one of claims 27 to 29 is implemented.

35. A communication system, wherein the communication system comprises a terminal device and a network device, wherein
the terminal device is configured to perform the method according to any one of claims 1 to 26; and
the network device is configured to perform the method according to any one of claims 27 to 29.
